(19) Europäisches Patentamt
European Patent Office
Office européen des brevets

(11) Numéro de publication: **0 364 352 B1**

(12) **FASCICULE DE BREVET EUROPEEN**

(45) Date de publication de fascicule du brevet: **29.12.93** (51) Int. Cl.$^5$: **C01B 33/34**

(21) Numéro de dépôt: **89402788.7**

(22) Date de dépôt: **10.10.89**

Demande divisionnaire 93107198.9 déposée le 10/10/89.

# (54) Procédé de synthèse de zéolithes appartenant à la famille structurale de la faujasite, produits obtenus et leur application en adsorption et catalyse.

(30) Priorité: **10.10.88 FR 8813269**

(43) Date de publication de la demande:
**18.04.90 Bulletin 90/16**

(45) Mention de la délivrance du brevet:
**29.12.93 Bulletin 93/52**

(84) Etats contractants désignés:
**CH DE ES FR GB IT LI NL SE**

(56) Documents cités:
**US-A- 2 882 244** **US-A- 3 130 007**
**US-A- 3 415 736** **US-A- 3 972 983**
**US-A- 4 333 859** **US-A- 4 377 502**

(73) Titulaire: **SOCIETE NATIONALE ELF AOUITAINE**
**Tour Elf,**
**2, Place de la Coupole,**
**La Défense 6**
**F-92400 Courbevoie(FR)**

(72) Inventeur: **Delprato, François**
**21, rue du Haut-Point**
**F-68400 Riedisheim(FR)**
Inventeur: **Guth, Jean-Louis**
**59, Rue Bellevue**
**F-68200 Brunstatt(FR)**
Inventeur: **Anglerot, Didier**
**10, allée des Noisetiers**
**F-64000 Pau(FR)**
Inventeur: **Zivkov, Catherine**
**55, Lotissement du Brunat**
**F-40180 Narosse(FR)**

(74) Mandataire: **Boillot, Marc**
**SOCIETE NATIONALE ELF AOUITAINE**
**Division Propriété Industrielle**
**Tour Elf**
**F-92078 Paris la Défense Cédex 45 (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.6/3.3.1)

## Description

L'invention a trait à un procédé de synthèse de zéolithes appartenant à la famille structurale de la faujasite. Elle concerne encore les produits obtenus et leur application en adsorption et catalyse.

Les zéolithes sont des tectosilicates cristallisés. Les structures sont constituées par des assemblages de tétraèdres $TO_4$ formant une charpente tridimensionnelle par la mise en commun des atomes d'oxygène. Dans les zéolithes du type aluminosilicate qui sont les plus communes, T représente le silicium tétravalent ainsi que l'aluminium trivalent. La charpente tridimensionnelle précitée présente des cavités et canaux qui possèdent des dimensions moléculaires et accueillent les cations compensant le déficit de charge lié à la présence de l'aluminium trivalent dans les tétraèdres $TO_4$, lesdits cations étant généralement échangeables.

D'une manière générale, la composition des zéolithes peut être représentée par la formule brute ($M_{2/n}O$; $Y_2O_3$ ; x $ZO_2$) à l'état déshydraté et calciné. Dans cette formule Z et Y désignent respectivement les éléments tétravalents et trivalents des tétraèdres $TO_4$, M représente un élément électropositif de valence n tel qu'un métal alcalin ou alcalino-terreux et constitue le cation de compensation, et x est un nombre pouvant varier de 2 à théoriquement l'infini auquel cas la zéolithe est une silice.

Chaque type de zéolithe possède une structure microporeuse distincte. La variation des dimensions et formes des micropores d'un type à l'autre, entraîne des changements dans les propriétés adsorbantes. Seules les molécules ayant certaines dimensions et formes sont capables d'entrer dans les pores d'une zéolithe particulière.

En raison de ces caractéristiques remarquables les zéolithes conviennent tout particulièrement pour la purification ou la séparation de mélanges gazeux ou liquides comme, par exemple, la séparation d'hydrocarbures par adsorption sélective.

La composition chimique avec en particulier la nature des éléments présents dans les tétraèdres $TO_4$ et la nature des cations de compensation échangeables, est également un facteur important intervenant dans la sélectivité de l'adsorption et surtout dans les propriétés catalytiques de ces produits. Ils sont utilisés comme catalyseurs ou supports de catalyseurs dans le craquage, le reformage et la modification d'hydrocarbures ainsi que dans l'élaboration de nombreuses molécules.

De nombreuses zéolithes existent dans la nature, ce sont des aluminosilicates dont les disponibilités et propriétés ne répondent pas toujours aux exigences des applications industrielles. De ce fait, la recherche de produits ayant des propriétés nouvelles a conduit à la synthèse d'une grande variété de zéolithes essentiellement du type aluminosilicate. Parmi les nombreux exemples de ce type on peut signaler la zéolithe A (US-A-2882243), la zéolithe X (US-A-2882244), la zéolithe Y (US-A-3130007), la zéolithe L (FR-A-1224154), la zéolithe T (FR-A-1223775), la zéolithe ZSM5(US-A-3702886),la zéolithe ZSM 12(US-A-3832449) et la zéolithe ZSM 48(EP-A-0015132).

Les zéolithes de la famille structurale de la faujasite sont caractérisées par une structure de charpente tridimensionnelle qui peut être décrite à partir de l'assemblage de modules appelés cube-octaèdres. Chacun de ces modules est constitué de 24 tétraèdres contenant les éléments Si et Al et pontés par l'oxygène selon le principe décrit plus haut. Dans le cube-octaèdre les tétraèdres sont liés de manière à former huit cycles à six tétraèdres et six cycles à quatre tétraèdres. Chaque cube-octaèdre est relié en coordinance tétraédrique, à travers quatre cycles à six tétraèdres, à quatre cube-octa èdres voisins.

Il est commode, pour montrer les relations qui unissent les différents membres de la famille structurale, de considérer des plans structuraux dans lesquels les cube-octaèdres sont disposés aux sommets d'un réseau plan d'hexagones. Chaque cube-octaèdre est ainsi relié à trois voisins dans le plan structural.

La quatrième direction de liaison est dirigée alternativement de part et d'autre du plan structural et permet de relier les cube-octaèdres entre plans structuraux voisins et parallèles.

Selon les dispositions relatives de ces plans structuraux les uns par rapport aux autres, on peut obtenir

- des séquences de trois plans structuraux distincts ABCABC... correspondant à une structure de symétrie cubique,
- des séquences de deux plans structuraux distincts ABAB.... correspondant à une structure de symétrie hexagonale,
- des séquences plus complexes qui peuvent être régulières ou irrégulières.

Tous les solides appartenant à la famille structurale de la faujasite sont des polytypes et possèdent des canaux inter-connectés d'environ 0,8nm de diamètre. Ainsi la faujasite est une zéolithe naturelle dont la structure correspond à l'empilement de trois plans structuraux distincts ABC correspondant à une structure de symétrie cubique. On peut obtenir, par synthèse à partir d'un gel d'aluminosilicate de sodium, des composés de même structure que la faujasite, lesdits composés étant appelés zéolithes X lorsque le rapport Si : Al du nombre d'atomes de silicium au nombre d'atomes d'aluminium est compris entre 1 et 1,5 et zéolithes Y lorsque ledit rapport Si:Al est compris entre 1,5 et 3. Des rapports Si:Al supérieurs à 3 ne

peuvent pas être obtenus par synthèse.

Néanmoins il existe des traitements post-synthèse permettant d'élever la valeur du rapport Si:Al au delà de 3, par exemple traitement à la vapeur d'eau à haute température après avoir échangé les cations $Na^+$ contre des protons ou des cations lanthane. On peut ainsi améliorer certaines propriétés telles que la stabilité hydrothermale nécessaire dans certaines applications comme, par exemple, le craquage des molécules d'hydrocarbures en raffinage du pétrole.

On peut également obtenir par synthèse des composés dont la structure se rapproche de la structure hexagonale ABABAB... mais avec des défauts d'empilement, qui se traduisent par l'élargissement de certaines raies des diagrammes de diffraction des rayons X utilisés pour identifier ces composés. Ainsi la zéolithe ZSM-3 (US-A-3415736) est préparée dans un milieu contenant les cations $Na^+$ et $Li^+$, son rapport Si:Al est proche de 1,5. En utilisant le couple de cations $Cs^+$ et $Na^+$, on obtient la zéolithe CSZ-3 (US-A-4,333,859) dont le rapport Si:Al est proche de 3. Les zéolithes du type ZSM 20 (US-A-3972983) cristallisent en présence de cations tétraéthylammonium ($TEA^+$) associés aux cations $Na^+$, toutefois pour obtenir le rapport Si:Al maximum de 4,4 il faut engager un gel d'aluminosilicate ayant un rapport Si:Al voisin de 15 et un rapport molaire $TEA^+$ : Si voisin de 1.

Le procédé général de synthèse des zéolithes de la famille structurale de la faujasite consiste en une cristallisation hydrothermale de gels d'aluminosilicates de compositions particulières renfermant un agent structurant, qui peut être un cation métallique et éventuellement un cation ou composé organique tel que $TEA^+$.

Plus précisément un tel procédé consiste à réaliser tout d'abord un mélange réactionnel ayant un pH supérieur à 10 et renfermant de l'eau, une source de silicium tétravalent, une source d'aluminium trivalent, une source d'ions hydroxydes sous la forme d'une base forte minérale ou organique, éventuellement une source de cations métalliques $M^{n+}$, n étant la valence de M, et éventuellement un agent structurant ST de manière à obtenir un gel d'aluminosilicate ayant la composition voulue pour permettre sa cristallisation en un composé de la famille structurale de la faujasite, puis à maintenir le gel obtenu, directement ou après murissement préalable, à une température au plus égale à 150 °C et sous une pression au moins égale à la pression autogène du mélange constitué par ledit gel pendant une durée suffisante pour effectuer la cristallisation de ce gel.

Lorsque l'agent structurant est un composé organique tel que $TEA^+$, le produit résultant de la cristallisation, après lavage à l'eau distillée ou désionisée et séchage en dessous de 100 °C, est un précurseur de la zéolithe recherchée, qui consiste en ladite zéolithe emprisonnant l'agent structurant dans ses cavités. On passe du précurseur à la zéolithe correspondante en soumettant ledit précurseur à une calcination à température appropriée pour détruire l'agent structurant organique.

Comme indiqué plus haut, un tel procédé ne permet pas de synthétiser des zéolithes ayant la structure de symétrie cubique de la faujasite et un rapport Si:Al supérieur à 3. De plus, dans le cas de la synthèse de zéolithes polytypes hexagonaux de la faujasite, l'obtention d'un rapport Si:Al supérieur à 3 nécessite l'utilisation d'un gel d'aluminosilicate présentant un rapport Si:Al élevé et simultanément renfermant une quantité molaire d'agent structurant, par exemple cations $TEA^+$, voisine de la quantité molaire de silice utilisée pour constituer le mélange réactionnel de départ, c'est-à-dire substantiellement plus élevée que la quantité molaire de l'élément aluminium.

On a maintenant trouvé que certaines molécules organiques appartenant au groupe des macrocycles et macropolycycles carbonés contenant des hétéroatomes choisis parmi oxygène, azote, silicium et soufre, ont la propriété d'orienter la cristallisation de gels d'aluminosilicates vers des zéolithes de la famille structurale de la faujasite caractérisées par un rapport Si:Al élevé, généralement supérieur à 3. Selon la taille et la symétrie du macrocycle ou macropolycycle, on peut obtenir soit une zéolithe présentant une structure cubique soit une zéolithe présentant une structure hexagonale On peut également obtenir une zéolithe de type faujasite formée de proportions variables de ces deux types de structure en utilisant des mélanges desdites molécules du groupe précité entre elles ou avec des costructurants acycliques oxygénés. L'utilisation desdits costructurants en mélange avec certaines des molécules du groupe précité permet également de former des zéolithes du type faujasite à structure cubique. D'autre part le macrocycle ou macropolycycle apporte un effet stabilisant important, qui permet de diminuer la concentration des ions hydroxydes dans le milieu de synthèse, ce qui a pour effet l'obtention d'un rapport Si:Al élevé et une amélioration substantielle du rendement, ledit effet stabilisant se maintenant encore en présence du costructurant acyclique oxygéné. Ainsi le rapport Si:Al du gel de départ peut être très proche du rapport Si:Al final dans les cristaux de zéolithe.

L'invention a donc pour objet un procédé de préparation de zéolithes appartenant à la famille structurale de la faujasite et présentant un rapport Si:Al supérieur à 1 et pouvant dépasser 3, ledit procédé étant du type dans lequel on réalise tout d'abord un mélange réactionnel ayant un pH supérieur à 10 et

renfermant de l'eau, une source de silicium tétravalent, une source d'aluminium trivalent, une source d'ions hydroxydes sous la forme d'une base forte minérale ou organique et un agent structurant ST de manière à obtenir un gel d'aluminosilicate ayant la composition voulue pour permettre sa cristallisation en un composé de la famille structurale de la faujasite, puis on maintient le gel obtenu, éventuellement après murissement préalable, à une température au plus égale à 150 °C et sous une pression au moins égale à la pression autogène du mélange constitué par ledit gel pendant une durée suffisante pour effectuer la cristallisation de ce gel en un précurseur de la zéolithe consistant en la zéolithe emprisonnant l'agent structurant ST dans ses cavités et l'on soumet ledit précurseur à une calcination pour détruire l'agent structurant et produire la zéolithe, et il se caractérise en ce que l'agent structurant ST consiste en au moins un composé MC appartenant au groupe formé par les macrocycles et macropolycycles carbonés qui renferment dans le ou les cycles des hétéroatomes choisis parmi l'oxygène, l'azote, le silicium et le soufre et qui contiennent 10 à 24 atomes par cycle.

Avantageusement la quantité d'agent structurant ST présente dans le mélange réactionnel destiné à former le gel est telle que le rapport molaire $ST:Al^{III}$ aille de 0,1 à 4, ledit rapport allant de préférence de 0,1 à 1 et tout particulièrement de 0,2 à 0,5.

En particulier, les ingrédients constituant le mélange réactionnel donnant naissance au gel d'aluminosilicate sont utilisés de telle sorte que ledit gel ait, en termes de rapports molaires, la composition suivante

| | Intervalles avantageux | Intervalles préférés |
|---|---|---|
| $Si^{IV} : Al^{III}$ | 2 à 20 | 4 à 10 |
| $OH^- : Al^{III}$ | 0,5 à 8 | 1 à 6 |
| $ST : Al^{III}$ | 0,1 à 4 | 0,1 à 1 |
| $H_2O : Al^{III}$ | 40 à 200 | 50 à 150 |

Les composés MC utilisables pour former l'agent structurant ST dans le procédé selon l'invention peuvent être notamment :

- des éthers couronnes, dont le cycle renferme 10 à 24 atomes et comporte uniquement des atomes d'oxygène comme hétéroatomes en nombre au moins égal à 4, parmi lesquels on peut citer les composés suivants :
  1,4,7,10-tétraoxacyclododécane(éther couronne"12 crown4"),
  1,4,7,10,13-pentaoxacyclopentadécane(éther couronne "15 crown 5"),
  1,4,7,10,13,16-hexaoxacyclooctadécane(éther couronne "18 crown 6"),
  2,3,11,12-dibenzo 1,4,7,10,13,16-hexaoxacyclooctadécane (éther couronne "dibenzo 18 crown 6"),
  2,3,11,12-dicyclohexano 1,4,7,10,13,16-hexaoxacyclooctadécane(éther couronne"dicyclohexano 18 crown 6"),
  2,3,14,15-dibenzo 1,4,7,10,13,16,19,22-octaoxacyclotétracosane(éther couronne "dibenzo 24 crown 8"),
  2,3,14,15-dicyclohexano 1,4,7,10,13,16,19,22-octaoxacyclotétracosane(éther couronne "dicyclohexano 24 crown 8"),
  2,3-benzo 1,4,7,10,13-pentaoxacyclopentadécane(éther couronne "benzo 15 crown 5");
- des composés ayant une structure comparable à celle des éthers-couronnes ci-dessus mais dont les atomes d'oxygène du cycle sont remplacés en partie ou en totalité par des substituants choisis parmi les atomes de soufre et les groupements >NH, >NR et

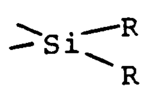

dans lesquels R est un hydrocarbyle en $C_1$ à $C_4$, parmi lesquels on peut citer les composés suivants :

1,4,8,11-tétrazacyclotétradécane,
1,4,8,12-tétrazacyclopentadécane,
1,4,8,11-tétrazacyclotridécane ,
1,4,7,10,13,16-hexaazacyclooctadécane trisulfate (hexacyclène trisulfate),
14-(diméthyl-1,1 sila) 1,4,7,10,13-pentaoxacyclotétradécane (éther couronne "diméthylsila 14 crown 5"),
11-(diméthyl-1,1 sila) 1,4,7,10-tétraoxacycloundécane (éther couronne "diméthylsila 11 crown 4")

et son dérivé 3,6,9-méthyl,

17-(diméthyl-1,1 sila) 1,4,7,10,13,16-hexaoxacycloheptadécane (éther couronne "diméthylsila 17 crown 6"),

20-(diméthyl-1,1 sila) 1,4,7,10,13,16,19-heptaoxacycloeicosane (éther couronne "diméthylsila 20 crown 7"),

1,4,7,10,13,16-hexathiacyclooctadécane,

17-(méthyl-1 vinyl-1 sila) 1,4,7,10,13,16-hexaoxacycloheptadécane (éther couronne "méthylvinylsila 17 crown 6"),

14-(méthyl-1 vinyl-1 sila) 1,4,7,10,13-pentaoxacyclotétradécane (éther couronne "méthylvinylsila 14 crown 5"),

1,7,10,16-tétraoxa 4,13-diazacyclooctadécane (Kryptofix 22),

1,7,10-trioxa 4,13-diazocyclopentadécane (Kryptofix 2.1);

- des macropolycycles carbonés du type des polyoxadiazabicycloalcanes dont chaque cycle renferme 10 à 18 atomes et possède au moins deux atomes d'oxygène en plus des deux atomes d'azote, parmi lesquels on peut citer les composés suivants:

  4,7,13,16,21-pentaoxa 1,10-diazabicyclo (8.8.5)-tricosane (Kryptofix 2.2.1),

  4,7,13,16,21,24-hexaoxa 1,10-diazabicyclo(8.8.8)-hexacosane (Kryptofix 2.2.2).

L'utilisation d'un agent structurant $ST_2$ consistant en au moins un composé $MC_2$ choisi parmi les macrocycles selon l'invention dont le cycle renferme au moins 18 atomes, par exemple 1,4,7,10,13,16-hexaoxacyclooctadécane, 1,7,10,16-tétraoxa 4,13-diazacyclooctadécane, hexacyclène trisulfate,1,4,7,10,13,16-hexathiacyclooctadécane, conduit à l'obtention de zéolithes ayant la structure de symétrie hexagonale des polytypes hexagonaux de la faujasite.

L'emploi d'un agent structurant $ST_1$ consistant en au moins un composé $MC_1$ choisi parmi les macrocycles selon l'invention ayant de 10 à 17 atomes dans le cycle et les macropolycycles selon l'invention possédant un nombre d'atomes dans chaque cycle allant de 10 à 18, par exemple 1,4,7,10,13-pentaoxacyclopentadécane, 4,7,13,16,21,24-hexaoxa 1,10-diazabicyclo (8.8.8)hexacosane, 17-(diméthyl-1,1 sila) 1,4,7,10,13,16-hexaoxacycloheptadécane, conduit à des zéolithes ayant la structure de symétrie cubique de la faujasite.

En utilisant un agent structurant ST consistant en un mélange d'au moins un composé MC1 avec au moins un composé $MC_2$, on obtient des zéolithes du type faujasite qui sont des produits formés de domaines ayant la structure d'une faujasite cubique et de domaines ayant la structure d'une faujasite hexagonale.

Pour caractériser ces produits, on peut définir un coefficient $\alpha$ représentant la fraction de phase du type faujasite à structure de symétrie hexagonale dans le produit, ledit coefficient $\alpha$ étant tel que $\alpha = 1$ pour un produit consistant uniquement en une faujasite à structure de symétrie hexagonale et que $\alpha = 0$ pour un produit consistant uniquement en une faujasite à structure de symétrie cubique.

Dans une variante du procédé selon l'invention, l'agent structurant ST résulte de l'association d'au moins un composé MC définis précédemment et incluant donc les composés $MC_1$ et $MC_2$ avec un costructurant CS consistant en au moins un composé acyclique oxygéné choisi parmi les composés de formule

$$R_1 - O \left[ C_m H_{2m-1} X - O \right]_g R_2$$

dans laquelle $R_1$ et $R_2$, identiques ou différents, représentent chacun un atome d'hydrogène ou un radical alcoyle en $C_1$ à $C_4$, X désigne un atome d'hydrogène ou un radical -OH , m est égal à 2 ou 3 et peut être différent d'un motif à l'autre et g est un nombre allant de 1 à 12.

Des exemples de composés de formule précitée utilisables pour former le costructurant sont tels que méthyléther d'éthylèneglycol de formule $CH_3OCH_2CH_2OH$, diméthyléther d'éthylèneglycol de formule $CH_3OCH_2CH_2OCH_3$, éthylèneglycol de formule $HOCH_2CH_2OH$, propylèneglycol de formule $HOCH_2CH_2CH_2OH$, éthers méthyliques de polyéthylène glycols de formule

$$CH_3 - O \left[ CH_2CH_2O \right]_{g_1} H$$

et polyéthylène glycols de formule

$$OH-[CH_2CH_2O]_{g_1}-H$$

avec $g_1$ allant de 2 à 9 et notamment tétraéthylèneglycol, pentaéthylèneglycol, hexaéthylèneglycol, heptaéthylèneglycol, octaéthylène glycol et mélanges de tels glycols, polypropylèneglycols de formule

$$HO-[CH_2CH_2CH_2\ O]_{g_1}\ H$$

avec $g_1$ allant de 2 à 9 et notamment tripropylèneglycol, tétrapropylèneglycol.

La quantité d'agent structurant, résultant de l'association d'au moins un composé MC avec le costructurant CS, présente dans le mélange réactionnel destiné à former le gel et la composition dudit agent structurant sont telles que le rapport molaire agent structurant : $Al^{III}$ aille de 0,1 à 4 et que le rapport molaire MC : $Al^{III}$ soit égal ou supérieur à 0,05. De préférence, lesdites quantité et composition sont telles que le rapport molaire agent structurant : $Al^{III}$ aille de 0,2 à 2 et que le rapport molaire MC : $Al^{III}$ soit égal ou supérieur à 0,1.

Le costructurant CS défini ci-dessus oriente la cristallisation des gels d'aluminosilicates vers des zéolithes de type faujasite à structure de symétrie cubique. Un agent structurant $ST_3$ associant le costructurant CS et au moins un composé $MC_1$ conduit à l'obtention de zéolithes de type faujasite à structure de symétrie cubique. Un agent structurant associant le costructurant CS et au moins un composé $MC_2$ conduit à l'obtention de produits formés de domaines ayant la structure d'une faujasite cubique et de domaines ayant la structure d'une faujasite hexagonale. De même, en associant un agent structurant $ST_3$ avec au moins un composé $MC_2$ on obtient également des produits formés des deux types de domaines précités.

Parmi les sources de silicium tétravalent $Si^{IV}$ utilisables dans la préparation du mélange réactionnel destiné à former le gel d'aluminosilicate, on peut citer les silices solides finement divisées sous la forme d'hydrogels, d'aérogels ou de suspensions colloidales, les silicates hydrosolubles tels que les silicates alcalins comme le silicate de sodium, les esters siliciques hydrolysables tels que les orthosilicates de tétraalcoyles de formule $Si(OR)_4$ dans laquelle R désigne un alcoyle en $C_1$ à $C_4$ tel que méthyle et éthyle. La source de silicium est mise en oeuvre sous la forme d'une solution aqueuse vraie, cas des silicates hydrosolubles, ou bien d'une suspension aqueuse qui peut être colloidale, cas des silices finement divisées.

Conviennent comme sources d'aluminium trivalent $Al^{III}$ les sels d'aluminium tels que sulfate, nitrate, chlorure, fluorure, acétate, les oxydes et hydroxyoxydes d'aluminium, les aluminates et notamment les aluminates alcalins tels que l'aluminate de sodium, les esters d'aluminium tels que les aluminium trialcoxydes de formule $Al\ (OR)_3$ dans laquelle R désigne un radical alcoyle en $C_1$ à $C_4$ tel que méthyle, éthyle ou propyle.

La source d'ions hydroxydes est choisie parmi les bases fortes minérales, notamment hydroxydes des métaux alcalins du groupe IA de la Classification Périodique des Eléments et hydroxydes des métaux alcalinoterreux Ca, Sr et Ba, et les bases fortes organiques, notamment hydroxydes d'ammoniums quaternaires, la préférence allant aux bases minérales et notamment à la soude NaOH.

Le mélange réactionnel destiné à former le gel d'aluminosilicate peut encore renfermer des cations $M^{n+}$ d'au moins un métal M, de valence n, autre que les métaux dont les hydroxydes sont des bases fortes, en quantité globale telle que le rapport molaire $M^{n+}$ : $Al^{III}$ soit au plus égal à 0,4 et de préférence au plus égal à 0,3. Lesdits cations $M^{n+}$ sont introduits dans ledit mélange réactionnel sous la forme de sels tels que sulfates, nitrates, chlorures ou acétates ou bien encore sous la forme d'oxydes.
Comme exemples de tels cations on peut citer notamment $Co^{++}$, $Cd^{++}$, $Mg^{++}$ et $Ag^{+}$.

Le mélange des ingrédients constituant le mélange réactionnel destiné à former le gel d'aluminosilicate peut être réalisé dans un ordre quelconque. Avantageusement on effectue ledit mélange en préparant tout d'abord, à température ambiante, une solution aqueuse basique renfermant une base forte, l'agent structurant ST et les cations $M^{n+}$ s'ils sont utilisés, puis en incorporant à cette solution une solution aqueuse de la source d'aluminium trivalent et une solution aqueuse ou une suspension, colloidale ou non, de la source de silicium tétravalent.

Le pH du mélange réactionnel, dont la valeur est supérieure à 10, est de préférence proche de 13.

Avant de procéder à la cristallisation du gel, on peut ajouter au milieu réactionnel destiné à former ledit gel, des germes de cristallisation en quantité allant avantageusement de 0,1 % à 10 % en poids du milieu réactionnel. Ces germes peuvent être produits soit par broyage d'une zéolithe de même nature que la phase cristalline à produire ou encore par synthèse à partir d'une solution de nucléation appropriée. Une solution de nucléation appropriée a par exemple la composition suivante, exprimée en oxydes :

15 $Na_2O$ ; 1 $Al_2O_3$ ; 10 $SiO_2$ ; 180 $H_2O$

En l'absence d'ajout de germes, il est avantageux de soumettre le gel d'aluminosilicate, formé à partir du mélange réactionnel, à un murissement, dans une enceinte fermée, à une température inférieure à la température de cristallisation pendant une durée pouvant aller d'environ 6 heures à environ 6 jours. Ledit murissement peut être réalisé en statique ou sous agitation.

La cristallisation du gel d'aluminosilicate, avec ou sans germe, s'effectue en chauffant le mélange réactionnel à une température au plus égale à 150 °C et de préférence allant de 90 °C à 120 °C et sous une pression correspondant au moins à la pression autogène du mélange réactionnel formant le gel. La durée du chauffage nécessaire à la cristallisation dépend de la composition du gel et de la température de cristallisation. Elle se situe généralement entre 2 heures et quinze jours.

Les cristaux obtenus, désignés par précurseurs de la zéolithe et consistant en la zéolithe emprisonnant l'agent structurant dans ses pores et cavités, sont séparés du milieu de cristallisation par filtration, puis lavés à l'eau distillée ou désionisée jusqu'à obtenir des eaux de lavage peu basique, c'est-à-dire dont le pH est inférieur à 9. Les cristaux lavés sont ensuite séchés en étuve à une température comprise entre 50 °C et 100 °C et de préférence aux environs de 70 °C.

La zéolithe est obtenue à partir des cristaux du précurseur en soumettant lesdits cristaux à une calcination à une température supérieure à 300 °C et de préférence comprise entre 400 °C et 700 °C pendant une durée suffisante pour éliminer l'agent structurant contenu dans le précurseur.

Comme indiqué précédemment, les zéolithes préparées par le procédé selon l'invention possèdent des rapports Si : Al supérieurs à 1 et pouvant dépasser 3 et, selon la nature de l'agent structurant, elles peuvent être soit des zéolithes du type faujasite présentant une structure de symétrie cubique ou bien des zéolithes polytypes hexagonaux de la faujasite présentant une structure de symétrie hexagonale ou encore des produits formés de domaines correspondant à une faujasite cubique et de domaines correspondant à une faujasite hexagonale.

La caractérisation des produits selon l'invention, à savoir les précurseurs issus de la cristallisation et les zéolithes proprement dites résultant de la calcination des précurseurs, peut se faire en utilisant les techniques suivantes :

.Microscopie électronique:

Au microscope électronique, les produits de structure cubique se présentent sous des formes compatibles avec la symétrie cubique (par exemple octaèdres réguliers), alors que les produits de structure hexagonale se présentent sous des formes compatibles avec la symétrie hexagonale (par exemple plaquettes hexagonales).

.Diagramme de diffraction des rayons X:

Ce diagramme de diffraction est obtenu au moyen d'un diffractomètre en utilisant la méthode classique des poudres avec le rayonnement $K\alpha$ du cuivre. Un étalon interne permet de déterminer précisément les valeurs des angles 2 O associés aux pics de diffraction. Les différentes distances interréticulaires $d_{hkl}$, caractéristiques de l'échantillon, sont calculées à partir de la relation de BRAGG. L'estimation de l'erreur de mesure $\Delta(d_{hkl})$ sur $d_{hkl}$ se calcule, en fonction de l'erreur absolue $\Delta(2\theta)$ affectée à la mesure de $2\theta$, par la relation de BRAGG. En présence d'un étalon interne, cette erreur est minimisée et prise couramment égale à ± 0,05 °. L'intensité relative I/Io affectée à chaque valeur $d_{hkl}$ est estimée à partir de la hauteur du pic de diffraction correspondant.

On utilise une échelle de symboles pour caractériser cette intensité relative comme suit : FF très forte, F = forte, mF = moyennement forte, m = moyenne, mf = moyennement faible f = faible, ff = très faible.

.Thermogravimétrie :

Les thermogrammes réalisés sur les échantillons de produits permettent de quantifier le nombre de molécules d'agent structurant et le nombre de molécules d'eau qui sont contenues dans une maille de la structure.

. RMN du carbone 13 :

La RMN du carbone 13 en polarisation croisée avec rotation à l'angle magique réalisée sur des échantillons du précurseur permet de confirmer la présence de l'agent structurant dans les cavités du produit.

. Détermination du rapport Si : Al :

Elle peut être réalisée en faisant appel à l'une ou l'autre des techniques suivantes :

- analyse chimique
- radiocristallographie (cf. D.W. BRECK : "Zeolite Molecular Sieves", Ed. John Wiley and Sons, New York, 1974, page 94)
- RMN du silicium 29 (cf. J. KLINOWSKI : "Progress in NMR Spectroscopy", 1984, Vol.16, pages 237 à 309).

Les zéolithes selon l'invention du type faujasite à structure de symétrie cubique présentent une valeur du paramètre a de la maille cubique comprise entre 2,4 et 2,5nm.

On peut donner à ces zéolithes cubiques la formule (I) suivante ramenée à une maille (assemblage de 192 tétraèdres) :

$$(vM_1^{q+})\ (wM^{n+})\ ((SiO_2)_{192-x}\ (AlO_2)_x)^{x-}\ (z\ H_2O) \qquad (I)$$

avec dans cette formule $M_1^{q+}$ désignant un cation q-valent d'un métal du groupe IA de la Classification Périodique des Eléments (q = 1) ou d'un métal alcalino-terreux choisi parmi Ca, Sr et Ba (q = 2) ou un cation monovalent renfermant de l'azote (q = 1)), notamment ammonium ou ammonium quaternaire, $M^{n+}$ représentant un cation métallique de valence n autre qu'un cation $M_1^{q+}$ , x, z, w et v étant des nombres tels que $30 < x \leqq 96$, $z \geqq O$ selon l'état d'hydration de la zéolithe (z = O pour une zéolithe complètement anhydre), $O < v \leqq \frac{x}{q}$ et $O \leqq w \leqq \frac{x}{n}$ avec $qv + wn \geqq x$.

Les zéolithes selon l'invention du type polytype hexagonal de la faujasite ont une structure de symétrie hexagonale présentant des paramètres a, b et c de la maille hexagonale tels que 1,72 <a = b< 1,77 nm et 2,80< c < 2,89 nm.

On peut donner à ces polytypes hexagonaux la formule (II), suivante ramenée à une maille (assemblage de 96 tétraèdres):

$$(u\ M_1^{q+})\ (r\ M^{n+})\ ((SiO_2)_{96-y}\ (AlO_2)_y)^{y-}\ (t\ H_2O) \qquad (II)$$

avec dans cette formule $M_1^{q+}$ désignant un cation q-valent d'un métal du groupe IA de la Classification Périodique des Eléments (q = 1) ou d'un métal alcalino-terreux choisi parmi Ca, Sr et Ba (q = 2) ou un cation monovalent renfermant de l'azote (q = 1), notamment ammonium ou ammonium quaternaire, $M^{n+}$ représentant un cation métallique de valence n autre qu'un cation $M_1^{q+}$ ,y,t,u et r étant des nombres tel que $15 \leqq y \leqq 48$, $t \geqq O$ selon l'état d'hydratation de la zéolithe (t = O pour une zéolithe complètement anhydre), $O < u \leqq \frac{y}{q}$ et $O \leqq r \leqq \frac{y}{n}$ avec $qu + rn \geqq y$.

Dans les produits interstratifiés, les phases ou domaines présentant une structure correspondant à celle d'une faujasite à structure de symétrie cubique peuvent être représentés également par la formule (I), tandis que les phases ou domaines présentant une structure correspondant à celle d'un polytype hexagonal de la faujasite peuvant être aussi représentés par la formule (II).

Les tableaux I et II ci-après représentent le diagramme de diffraction des rayons X caractéristique des zéolithes cubiques du type faujasite (Tableau I) ou des polytypes hexagonaux de la faujasite (Tableau II), après calcination des produits à 600 °C pendant 4 heures.

Dans la colonne des $d_{hkl}$ on a donné les valeurs moyennes des distances interréticulaires. Chacune de ces valeurs doit être affectée de l'erreur de mesure $\Delta(d_{hkl})$ comprise entre ± 0,2 et ± 0,008.

Les variations qui peuvent être observées par rapport à ces valeurs moyennes sont essentiellement liées à la nature des cations de compensation et au rapport Si:Al de la zéolithe. Les mêmes remarques s'appliquent aux intensités relatives I/Io.

TABLEAU I

| $2\theta$ (degrés) | $d_{hkl}$($1O^{-1}$nM) | (hkl) | I/Io |
|---|---|---|---|
| 6,245 | 14,14 ± O,2 | (1 1 1) | FF |
| 10,205 | 8,66 | (2 2 0) | F |
| 11,965 | 7,39 | (3 1 1) | mF |
| 15,735 | 5,627 ± 0,05 | (3 3 1) | F |
| 18,775 | 4,721 | (5 1 1) | f |
| 20,465 | 4,335 | (4 4 0) | mf |
| 22,895 | 3,881 | (6 2 0) | f |
| 23,755 | 3,727 | (5 3 3) | mF |
| 25,105 | 3,544 | (4 4 4) | ff |
| 25,965 | 3,428 | (5 5 1) | ff |
| 27,175 | 3,279 | (6 4 2) | mF |
| 27,885 | 3,196 ± 0,008 | (7 3 1) | ff |
| 29,765 | 2,999 | (7 3 3) | f |

TABLEAU II

| $2\theta$ (°) | $d_{hkl}$ ($10^{-1}$nM) | (h k l) | I/Io |
|---|---|---|---|
| 5,88 | 15,03 ± 0,2 | (1 0 0) | FF |
| 6,23 | 14,2 | (0 0 2) | FF |
| 6,66 | 13,3 | (1 0 1) | F |
| 8,40 | 10,52 | (1 0 2) | f |
| 10,19 | 8,68 ± 0,08 | (1 1 0) | F |
| 11,06 | 7,99 | (1 0 3) | mF |
| 11,78 | 7,51 | (2 0 0) | mF |
| 11,95 | 7,40 | (1 1 2) | mF |
| 13,49 | 6,56 | (2 0 2) | ff |
| 15,06 | 5,88 ± 0,05 | (2 0 3) | f |
| 15,58 | 5,68 | (0 0 5) | F |
| 15,89 | 5,57 | (2 1 1) | f |
| 16,73 | 5,29 | (1 0 5) | f |
| 17,18 | 5,16 | (2 0 4) | F |
| 18,22 | 4,87 | (2 1 3) | f |
| 18,79 | 4,72 | (1 1 5) | f |
| 19,67 | 4,51 | (1 0 6) | f |
| 20,45 | 4,34 | (2 2 0) | mF |
| 22,22 | 4,00 | (3 1 2) | f |
| 22,75 | 3,91 | (1 0 7) | f |
| 23,30 | 3,82 | (3 1 3) | f |
| 23,66 | 3,76 | (3 0 5) | F |
| 24,75 | 3,59 | (3 1 4) | f |
| 25,83 | 3,45 | (2 2 5) | f |
| 26,52 | 3,36 | (2 1 5) | f |
| 27,16 | 3,28 | (4 1 0) | f |
| 28,77 | 3,103 ± 0,008 | (3 2 4) | f |
| 30,38 | 2,942 | (4 0 6) | ff |
| 30,89 | 2,894 | (3 3 0) | f |
| 31,20 | 2,866 | (5 0 3) | f |
| 31,56 | 2,834 | (3 3 2) | ff |

Les précurseurs de zéolithes, qui sont produits lors de l'étape de cristallisation du procédé selon l'invention et dont la calcination conduit aux zéolithes dont les formules ont été définies plus haut, sont des

aluminosilicates cristallins présentant un rapport Si:Al supérieur à 1 et pouvant dépasser 3, qui ont soit, la structure cubique de la faujasite correspondant à un diagramme de diffraction des rayons X comparable à celui donné dans le tableau III ou bien la structure hexagonale des polytypes hexagonaux de la faujasite correspondant à un diagramme de diffraction des rayons X comparable à celui donné dans le tableau IV ou encore comportent des phases ou domaines présentant la structure d'un faujasite cubique correspondant à un diagramme de diffraction des rayons X comparable à celui donné dans le tableau III et des phases ou domaines présentant la structure d'une faujasite hexagonale correspondant à un diagramme de diffraction des rayons X comparable à celui donné dans le tableau IV et qui possèdent des cavités ou canaux emprisonnant des molécules de structurant ST qui sont des molécules MC ou des mélanges de molécules MC et de costructurant CS.

Les précurseurs présentant la structure de symétrie cubique de la faujasite peuvent être représentés par une formule qui, ramenée à une maille de la structure cubique, s'écrit comme suit :

$(v\ M_1^{q+})\ (w\ M^{n+})\ ((SiO_2)_{192-x}\ (AlO_2)_x)^{x-}\ (p\ ST_1)\ (z\ H_2O)$

et dans laquelle $M_1^{q+}$, $M^{n+}$, x, v, w, et z ont les significations données précédemment, p est un nombre tel que $4 \leqq p \leqq 10$ et $ST_1$ représente une molécule d'au moins un composé $MC_1$ choisi parmi les macrocycles carbonés ayant de 10 à 17 atomes et les macropolycycles carbonés renfermant 10 à 18 atomes dans chaque cycle, lesdits macrocycles et macropolycycles renfermant en outre dans le ou les cycles des hétéroatomes choisis parmi O, S, N et Si, ou d'un mélange d'au moins un composé $MC_1$ et d'un costructurant CS consistant en au moins un composé de formule

$$R_1 - O \left[ C_mH_{2m-1}\ X - O \right]_g R_2$$

dans laquelle $R_1$, $R_2$, X, m et g ont les significations données plus haut.

TABLEAU III

| 2θ (degrés) | $d_{hkl}$ ($10^{-1}$nM) | (h k l) | I/Io |
|---|---|---|---|
| 6,26 | 14,10 ± 0,2 | (1 1 0) | FF |
| 10,23 | 8,65 | (2 2 0) | f |
| 12,01 | 7,35 | (3 1 1) | mF |
| 15,77 | 5,615± 0,05 | (3 3 1) | F |
| 18,81 | 4,713 | (5 1 1) | m |
| 20,49 | 4,331 | (4 4 0) | mF |
| 22,93 | 3,875 | (6 2 0) | f |
| 23,77 | 3,740 | (5 3 3) | mF |
| 25,15 | 3,537 | (4 4 4) | ff |
| 25,93 | 3,433 | (5 5 1) | ff |
| 27,19 | 3,276 | (6 4 2) | mF |
| 27,93 | 3,191±0,008 | (7 3 1) | ff |
| 29,81 | 2,994 | (7 3 3) | f |

TABLEAU IV

| 2θ (degrés) | dhkl ($10^{-1}$nM) | (h k l) | I/Io |
|---|---|---|---|
| 5,88 | 15,02 ± 0,2 | (1 0 0) | FF |
| 6,24 | 14,15 | (0 0 2) | F |
| 6,65 | 13,28 | (1 0 1) | F |
| 10,12 | 8,73 ± 0,08 | (1 ) | f |
| 11,01 | 8,03 | (1 0 3) | mf |
| 11,93 | 7,41 | (1 1 2) | mF |
| 13,58 | 6,515 | (2 0 2) | ff |
| 15,57 | 5,686± 0,05 | (0 0 5) | mF |
| 15,86 | 5,580 | (2 1 1) | mf |
| 16,70 | 5,305 | (1 0 5) | mf |
| 17,15 | 5,165 | (2 0 4) | F |
| 18,16 | 4,88 | (2 1 3) | mf |
| 18,71 | 4,74 | (1 1 5) | mf |
| 19,65 | 4,509 | (1 0 6) | mF |
| 20,42 | 4,345 | (2 2 0) | F |
| 22,14 | 4,011 | (3 1 2) | mF |
| 22,71 | 3,912 | (1 0 7) | mf |
| 23,32 | 3,811 | (3 1 3) | mf |
| 23,60 | 3,766 | (3 0 5) | mf |
| 24,68 | 3,604 | (3 1 4) | mf |
| 25,81 | 3,449 | (2 2 5) | f |
| 26,49 | 3,362 | (2 1 5) | f |

Les précurseurs présentant la structure de symétrie hexagonale des polytypes hexagonaux de la faujasite peuvent être représentés par une formule qui, ramenée à une maille hexagonale de la structure cristalline, s'écrit comme suit :

$(u\ M_1^{q+})\ (r\ M^{n+})\ ((SiO_2)_{96-y}\ (AlO_2)_y)^{y-}\ (j\ ST_2)\ (t\ H_2O)$

dans laquelle $M_1^{q+}$ , $M^{n+}$ , y, u, r et t ont les significations données précédemment, j est un nombre tel que $2 \leqq j \leqq 5$ et $ST_2$ représente une molécule d'au moins un composé $MC_2$ choisi parmi les macrocycles carbonés qui renferment dans le cycle des hétéroatomes choisis parmi O, N, Si et S et qui contiennent au moins 18 atomes dans le cycle.

Les molécules constituant les agents structurants ST, $ST_1$ et $ST_2$ peuvent être notamment choisies parmi les éthers couronnes dont le cycle renferme au moins quatre atomes d'oxygène, les composés ayant une structure comparable à celles des éthers couronnes mais dont les atomes d'oxygène du cycle sont remplacés en partie ou en totalité par des substituants choisis parmi les atomes de soufre et les groupements >NH , >NR et

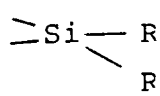

dans lesquels R est un radical hydrocarboné monovalent en $C_1$ à $C_4$ ou encore parmi les macropolycycles carbonés du type des polyoxadiazabicycloalcanes dont chaque cycle renferme 10 à 18 atomes et possède au moins deux atomes d'oxygène en plus des deux atomes d'azote et également, pour les agents structurants ST et $ST_1$, parmi les associations de telles molécules avec les molécules constituant le costructurant CS. Conviennent en particulier comme molécules pour constituer les agents structurants ST, $ST_1$ et $ST_2$ celles qui sont citées explicitement plus haut à cet effet.

Les zéolithes obtenues par le procédé selon l'invention sont utilisables dans les mêmes types d'application que les zéolithes de structure similaire et de rapport Si : Al comparable ou inférieur préparées par des méthodes voisines ou différentes.

Ainsi les zéolithes obtenues selon l'invention conviennent comme adsorbant pour effectuer l'adsorption sélective de molécules dont les dimensions sont inférieures à 0,8 nM ou encore, après avoir été soumises à des réactions d'échange avec des cations divers, comme catalyseurs ou composantes de catalyseurs utilisables dans les réactions de conversion catalytique de composés organiques et notamment de composés hydrocarbonés. Par exemple, par traitement d'échange avec des cations ammonium suivi d'une calcination on obtient la forme protonée de la zéolithe. Cette forme ainsi que celles résultant d'un traitement d'échange avec des cations des terres rares comme le lanthane sont appropriées comme catalyseurs acides pour l'hydrocraquage des charges pétrolières. Les zéolithes peuvent être également soumises à des traitements d'échange avec des cations de métaux des groupes II à VIII de la Classification Périodique pour former des produits appropriés comme catalyseurs de conversion des hydrocarbures. Pour leurs applications en tant que catalyseurs, les zéolithes modifiées par échange avec des cations leur conférant des propriétés catalytiques peuvent être utilisées seules ou sous la forme de produits composites résultant du mélange de ces zéolithes modifiées avec d'autres produits catalytiquement actifs et/ou avec une matrice amorphe telle qu'un gel de silice ou encore un gel mixte de silice et d'un autre oxyde tel magnésie, alumine, oxyde de titane, oxyde de zirconium, ladite matrice servant à conférer, entre autres, une meilleures stabilité thermique au catalyseur.

Les catalyseurs composites associant une ou plusieurs zéolithes catalytiquement actives à une matrice à base de gel de silice ou de gel mixte de silice et d'un autre oxyde sont particulièrement appropriés pour les opérations en lit mobile ou en lit fluidisé car ils peuvent être façonnés aisément, par exemple par séchage par pulvérisation d'une suspension aqueuse des ingrédients les composant, en grains ayant les dimensions requises pour ces opérations.

Les exemples suivants sont donnés à titre non limitatif pour illustrer l'invention.

Dans ces exemples, les quantités et pourcentages sont donnés en poids sauf indication contraire.

EXEMPLE 1 :

Synthèse d'un polytype hexagonal de la faujasite

On préparait tout d'abord un gel d'aluminosilicate en opérant comme suit dans un récipient de capacité appropriée, le contenu dudit récipient étant maintenu sous agitation pendant toute la durée de l'opération. Dans le récipient on introduisait 9 parties d'eau, puis 0,75 partie de soude NaOH et, après dissolution de la soude, 1,45 partie d'éther couronne "18 crown 6". Après dissolution totale de l'éther couronne, on ajoutait alors au contenu du récipient 1 partie d'un aluminate de sodium renfermant 56 % d'$Al_2O_3$ et 37 % de $Na_2O$ et chauffait légèrement le mélange réactionnel pour dissoudre complètement l'aluminate. Après retour à température ambiante, on introduisait alors dans le récipient 8,2 parties d'une suspension colloidale de silice renfermant 40 % de $SiO_2$ et 60 % d'eau.

On obtenait ainsi un gel d'aluminosilicate dont la composition molaire, rapportée à une mole d'$Al_2O_3$, était la suivante :

10 $SiO_2$ ; 1 $Al_2O_3$ ; 2,8 $Na_2O$ ;1 éther couronne; 140 $H_2O$.

Le gel obtenu était soumis à un murissement à température ambiante pendant 48 heures dans un récipient fermé.

Le gel muri était ensuite placé dans un autoclave et maintenu à 110°C dans ce dernier pendant 96 heures pour former un produit cristallisé. Les cristaux formés étaient séparés du milieu réactionnel par filtration, puis lavés à l'eau distillée jusqu'à faible basicité (pH inférieur à 9) des eaux de lavage et enfin séchés à environ 60°C dans une étuve.

Les cristaux séchés étaient ensuite calcinés à 600°C pendant 4 heures afin d'éliminer les molécules de l'éther couronne utilisé comme agent structurant et d'obtenir la zéolithe.

Avant calcination, le produit cristallisé présente un diagramme de diffraction des rayons X comparable à celui donné dans le tableau IV.

La formule trouvée pour ledit produit, ramenée à une maille de la structure qui est de symétrie hexagonale, s'écrit :

$21\ Na^{+}\ ((SiO_2)_{75,6}\ (AlO_2)_{20,4})^{20,4-}\ 4(\text{"18 crown 6"})67H_2O.$

La zéolithe formée par calcination du produit ci-dessus présente un diagramme de diffraction des rayons X comparable à celui du table II caractéristique des polytypes hexagonaux calcinés de la faujasite.

La formule trouvée pour cette zéolithe, ramenée à une maille de la structure hexagonale, s'écrit à l'état anhydre :

$21\ Na^+\ ((SiO_2)_{75,6}\ (AlO_2)_{20,4})^{20,4-}$

On observe un très léger excès de charge positive par rapport à la neutralité.

On retrouve dans la charpente de la zéolithe environ 80 % de la silice engagée dans l'opération.

EXEMPLE 2 :

Synthèse d'un polytype hexagonal de la faujasite

On opérait comme indiqué dans l'exemple 1 avec toutefois les variations suivantes des conditions opératoires :

. préparation du gel : 0,48 partie de soude et 0,7 partie d'éther couronne "18 crown 6"
. murissement : 24 heures à 20 °C
. cristallisation : 110 °C pendant 144 heures
. calcination : 400 °C pendant 6 heures

Le gel d'aluminosilicate, avant murissement, avait la composition molaire suivante rapportée à 1 mole d'$Al_2O_3$ :

10 $SiO_2$ ; 1 $Al_2O_3$ ; 2,2 $Na_2O$ ; O,5 éther couronne; 140 $H_2O$

Avant calcination, le produit cristallisé présente un diagramme de diffraction des rayons X comparable à celui donné dans le tableau IV.

La formule trouvée pour ledit produit, ramenée à une maille de la structure qui est de symétrie hexagonale, s'écrit :

$19\ Na^+\ ((SiO_2)_{77,2}\ (AlO_2)_{18,8})^{18,8-}$ 3,9("18 crown 6")66$H_2O$

La zéolithe formée par calcination du produit ci-dessus présente un diagramme de diffraction des rayons X comparable à celui du tableau II caractéristique des polytypes hexagonaux calcinés de la faujasite.

La formule trouvée pour cette zéolithe, ramenée à une maille de la structure hexagonale, s'écrit à l'état anhydre :

$19\ Na^+\ ((SiO_2)_{77,2}\ (AlO_2)_{18,8})^{18,8-}$

On retrouve dans la charpente de la zéolithe environ 80 % de la silice engagée dans l'opération.

EXEMPLE 3 :

Synthèse d'un polytype hexagonal de la faujasite

On opérait comme indiqué dans l'exemple 1 avec toutefois les variations suivantes des conditions opératoires :

. préparation du gel : 0,57 partie de soude, 1 partie d'éther couronne "18 crown 6" et 0,25 partie d'un acétate de cobalt renfermant 24% de cobalt et 29% d'eau, l'acétate étant ajouté après dissolution de l'éther couronne et avant addition de l'aluminate.
. murissement : 24 heures à température ambiante
. cristallisation : 110 °C pendant 144 heures
. calcination : 600 °C pendant 6 heures.

Le gel d'aluminosilicate, avant murissement, avait la composition molaire suivante rapportée à 1 mole d'$Al_2O_3$ :

10 $SiO_2$; 1 $Al_2O_3$; 2,4 $Na_2O$; 0,7 éther couronne;0,1 CoO;140 $H_2O$.

Avant calcination, le produit cristallisé présente un diagramme de diffraction des rayons X comparable à celui donné dans le tableau IV.

La formule trouvée pour ledit produit, ramenée à une maille de la structure qui est de symétrie hexagonale, s'écrit :

$$\begin{bmatrix} 18\ Na^{+} \\ \varepsilon\ Co^{++} \end{bmatrix} ((SiO_2)_{78,5}\ (AlO_2)_{17,5})^{17,7-}\ 3,7(\text{"18 crown 6"})70H_2O$$

avec dans cette formule $\varepsilon < 0,1$.

La zéolithe formée par calcination du produit précurseur ci-dessus présente un diagramme de diffraction des rayons X comparable à celui donné dans le tableau II caractéristique des polytypes hexagonaux calcinés de la faujasite.

La formule déterminée pour cette zéolithe, ramenée à une maille de la structure hexagonale, s'écrit à l'état anhydre :

$$\begin{bmatrix} 18Na^{+} \\ \varepsilon\ Co^{++} \end{bmatrix} ((SiO_2)_{78,5}\ (AlO_2)_{17,5})^{17,5-}$$

avec dans cette formule $\varepsilon < 0,1$.

On retrouve dans la charpente de la zéolithe environ 90% de la silice engagée dans l'opération.

EXEMPLE 4 :

Synthèse d'un polytype hexagonal de la faujasite

On opérait comme indiqué pour l'exemple 3 en remplaçant toutefois l'acétate de cobalt par 0,2 partie de nitrate d'argent et en mettant en oeuvre la calcination du précurseur de la zéolithe à 400 °C pendant 6 heures.

Le gel d'aluminosilicate, avant murissement, avait la composition molaire suivante rapportée à 1 mole d'$Al_2O_3$ :

10 $SiO_2$;1$Al_2O_3$; 2,4 $Na_2O$;0,5 éther couronne;0,1$Ag_2O$;140$H_2O$

Avant calcination, le produit cristallisé présente un diagramme de diffraction des rayons X comparable à celui donné dans le tableau IV.

La formule déterminée pour ledit produit, ramenée à une maille de la structure qui est de symétrie hexagonale, s'écrit

$$\begin{bmatrix} 18Na^{+} \\ \varepsilon\ Ag^{+} \end{bmatrix} ((SiO_2)_{78,5}\ (AlO_2)_{17,5})^{17,5-}\ 3,7\ (\text{"18 crown 6"})70H_2O$$

avec dans cette formule $\varepsilon < 0,1$.

La zéolithe formée par calcination du produit précurseur ci-dessus présente un diagramme de diffraction des rayons X comparable à celui donné dans le tableau II caractéristique des polytypes hexagonaux calcinés dans la faujasite.

La formule déterminée pour cette zéolithe, ramenée à une maille de la structure hexagonale, s'écrit à l'état anhydre :

$$\begin{bmatrix} 18Na^{+} \\ \varepsilon\ Ag^{+} \end{bmatrix} ((SiO_2)_{78,5}\ (AlO_2)_{17,5})^{17,5-}$$

avec dans cette formule $\varepsilon < 0,1$.

On retrouve dans la charpente de la zéolithe environ 90% de la silice engagée dans l'opération.

EXEMPLE 5 :

Synthèse d'une faujasite cubique

On opérait comme indiqué dans l'exemple 1 avec toutefois les variations suivantes des conditions opératoires :

. préparation du gel : 0,66 partie de soude et 0,84 partie d'éther couronne "15 crown 5"
. murissement : 24 heures à température ambiante
. cristallisation : 100 heures à 110 °C
. calcination : 400 °C pendant 4 heures.

Le gel d'aluminosilicate, avant murissement, avait la composition molaire suivante rapportée à 1 mole d'$Al_2O_3$ :
10 $SiO_2$; 1 $Al_2O_3$; 2,6 $Na_2O$; 0,7 éther couronne; 140 $H_2O$.

Avant calcination, le produit cristallisé présente un diagramme de diffraction des rayons X comparable à celui donné dans le tableau III.

La formule déterminée pour ledit produit, ramenée à une maille de la structure qui est de symétrie cubique, s'écrit :

$40Na^+((SiO_2)_{152,8}(AlO_2)_{39,2})^{39,2-}$7,6("15 crown 5")135 $H_2O$.

La zéolithe formée par calcination du produit ci-dessus présente un diagramme de diffraction des rayons X comparable à celui du tableau I caractéristique des zéolithes cubiques calcinées du type de la faujasite.

La formule déterminée pour cette zéolithe cubique, ramenée à une maille de la structure cubique, s'écrit à l'état anhydre :

$40\ Na^+\ ((SiO_2)_{152,8}\ (AlO_2)_{39,2})^{39,2-}$.

On retrouve dans la charpente de la zéolithe environ 80% de la silice engagée dans l'opération.

EXEMPLE 6 :

Synthèse d'une faujasite cubique

On opérait comme indiqué dans l'exemple 1 avec toutefois les variations suivantes des conditions opératoires:

. préparation du gel : 0,57 partie de soude et 1,2 parties d'éther couronne "15 crown 5"
. cristallisation : 192 heures à 115 °C
. calcination : 500 °C pendant 4 heures

Le gel d'aluminosilicate, avant murissement, avait la composition molaire suivante rapportée à 1 mole d'$Al_2O_3$ :

10 $SiO_2$; 1 $Al_2O_3$; 2,4 $Na_2O$; 1 éther couronne; 140 $H_2O$.

Avant calcination, le produit cristallisé présente un diagramme de diffraction des rayons X comparable à celui donné dans le tableau III et correspondant à une structure de symétrie cubique.

La formule déterminée pour ledit produit, ramenée à une maille de la structure cubique, s'écrit :

$36Na^+((SiO_2)_{156,4}(AlO_2)_{35,6})^{35,6-}$7,7 ("15 crown 5")133 $H_2O$

La zéolithe formée par calcination du produit ci-dessus présente un diagramme de diffraction des rayons X comparable à celui du tableau I caractéristique des zéolithes cubiques calcinées du type de la faujasite.

La formule déterminée pour cette zéolithe cubique, ramenée à une maille de la structure cubique, s'écrit à l'état anhydre :

$36\ Na^+\ ((SiO_2)_{156,4}\ (AlO_2)_{35,6})^{35,6-}$

On retrouve dans la charpente de la zéolithe environ 85% de la silice engagée dans l'opération.

EXEMPLE 7 :

Synthèse d'une faujasite cubique

On préparait tout d'abord un gel d'aluminosilicate en opérant comme suit dans un récipient en verre de capacité appropriée, le contenu dudit récipient étant maintenu sous agitation pendant toute la durée de l'opération. Dans le récipient on introduisait 1,8 parties d'eau distillée, 0,12 partie d'un aluminate de sodium renfermant 56% d'$Al_2O_3$ et 37% de $Na_2O$, 0,3 partie d'un macropolycycle commercialisé sous le nom "KRYPTOFIX 2.2.2." et 0,12 partie de soude. Lorsque le contenu du récipient avait un aspect limpide, on lui ajoutait alors lentement 1,64 partie d'une suspension colloidale de silice renfermant 40% de $SiO_2$ et 60% d'eau.

On obtenait ainsi un gel d'aluminosilicate dont la composition molaire, rapportée à 1 mole d'$Al_2O_3$, était la suivante :

10 $SiO_2$; 1 $Al_2O_3$; 2,4 $Na_2O$; 0,7 macropolycycle; 140 $H_2O$

Le gel obtenu était soumis à un murissement de 24 heures à température ambiante dans un récipient fermé.

Le gel muri était ensuite placé dans un autoclave et maintenu à 115°C dans ce dernier pendant 10 jours pour former un produit cristallisé. Le produit résultant était séparé du milieu réactionnel par filtration, puis lavé à l'eau distillée jusqu'à ce que les eaux de lavage aient un pH inférieur à 9 et enfin séché à environ 60°C dans une étuve.

Le produit obtenu consistait en un mélange d'une phase cristallisée et d'une phase amorphe.

La phase cristallisée présente un spectre de diffraction des rayons X correspondant celui d'une faujasite de symétrie cubique et riche en silicium, le rapport Si : Al de ladite phase cristallisée étant d'environ 4. Les cristaux constituant cette phase cristallisée sont des entités isométriques de 3 à 7 µm ne présentant aucune extraction.

EXEMPLE 8 :

Synthèse d'une faujasite cubique

On préparait un gel d'aluminosilicate en opérant comme décrit dans l'exemple 1, mais en utilisant seulement 0,66 partie de soude et en remplaçant l'éther couronne "18 crown 6" par 1,61 partie de l'éther couronne "diméthylsila 17 crown 6".

Le gel obtenu était soumis à un murissement pendant 24 heures à 25°C.

Le gel muri était ensuite placé dans un autoclave et maintenu à 115°C dans ce dernier pendant 6 jours aux fins de cristallisation. Le produit résultant était alors séparé du milieu réactionnel par filtration, puis lavé à l'eau distillée jusqu'à ce que les eaux de lavage aient un pH inférieur à 9 et enfin séché à environ 60°C dans une étuve.

Le produit obtenu consistait en un mélange d'une phase cristallisée et d'une phase amorphe.

La phase cristallisée présente, après calcination à 600°C pendant 4 heures, un spectre de diffraction des rayons X comparable à celui donné dans le tableau I caractéristique d'une faujasite de symétrie cubique, le rapport Si:Al de ladite phase cristallisée étant d'environ 4

EXEMPLE 9 :

Synthèse d'un polytype hexagonal de la faujasite.

On opérait comme indiqué dans l'exemple 1 avec toutefois les variations suivantes dans les conditions opératoires :

- . préparation du gel : 0,84 partie de soude, 1 partie d'éther couronne "18 crown 6" et 9,9 parties de la suspension de silice
- . murissement : 24 heures à température ambiante sous agitation
- . cristallisation : 15 jours à 115°C.

Le gel d'aluminosilicate, avant murissement, avait la composition molaire suivante rapportée à 1 mole d'$Al_2O_3$ :

12 $SiO_2$; 1 $Al_2O_3$; 3,8 $Na_2O$; 0,7 éther couronne; 140 $H_2O$

Le produit cristallisé se présentait sous la forme de cristaux plus ou moins sphériques ayant 10 à 13 µm de diamètre.

Avant calcination, le produit cristallisé présente un diagramme de diffraction des rayons X comparable à celui donné dans le tableau IV.

La formule trouvée pour ledit produit, ramenée à une maille de la structure qui est de symétrie hexagonale, s'écrit :

$19\ Na^+\ ((SiO_2)_{77,6}\ (AlO_2)_{18,4})^{18,4-}\ 4,1(\text{"18 crown 6"})68\ H_2O$

La zéolithe formée par calcination du produit ci-dessus présente un diagramme de diffraction des rayons X comparable à celui du tableau II caractéristique des polytypes hexagonaux calcinés de la faujasite.

La formule trouvée pour cette zéolithe, ramenée à une maille de la structure hexagonale, s'écrit à l'état anhydre

$19\ Na^+\ ((SiO_2)_{77,6}\ (AlO_2)_{18,4})^{18,4-}$

On retrouve dans la charpente de la zéolithe, dont le rapport Si:Al est d'environ 4,3, 85% environ de la silice engagée dans l'opération.

EXEMPLE 10 :

Synthèse d'un polytype hexagonal de la faujasite avec utilisation de germes de cristallisation

On préparait un gel d'aluminosilicate en opérant comme indiqué dans l'exemple 1, mais en utilisant 0,48 partie de soude et 1 partie de l'éther couronne"18crown 6"

Le gel obtenu avait la composition molaire suivante rapportée à 1 mole d'$Al_2O_3$ :

10 $SiO_2$; 1 $Al_2O_3$; 2,2 $Na_2O$; 0,7 éther couronne; 140 $H_2O$

Le gel précité était soumis à un murissement pendant 5 heures à 25 °C.

Par ailleurs, on préparait des germes en broyant finement des cristaux du polytype hexagonal calciné obtenu dans l'exemple 1. On ajoutait ensuite au gel muri 0,2 partie des germes obtenus additionnés de 0,3 partie de soude.

Le mélange ainsi réalisé était alors maintenu dans un autoclave porté à 115 °C pendant une période de 55 heures aux fins de cristallisation.

Les cristaux obtenus étaient séparés du milieu réactionnel, puis lavés, séchés et calcinés comme indiqué dans l'exemple 1.

Avant calcination, le produit cristallisé présente un diagramme de diffraction des rayons X comparable à celui donné dans le tableau IV.

La formule trouvée pour ledit produit, ramenée à une maille de la structure qui est de symétrie hexagonale, s'écrit :

$19\ Na^+((SiO_2)_{77,3}(AlO_2)_{18,7}(^{18,7-}\ 3,9(\text{"18 crown 6"})\ 67\ H_2O$ .

La zéolithe formée par calcination du produit ci-dessus présente un diagramme de diffraction des rayons X comparable à celui donné dans le tableau II caractéristique des polytypes hexagonaux calcinés de la faujasite.

On retrouve dans la charpente de la zéolithe environ 90% de la silice engagée dans l'opération.

EXEMPLE 11

Utilisation d'un agent structurant consistant en un mélange d'éthers couronnes "15 crown 5" et "18 crown 6" :

On préparait tout d'abord un gel d'aluminosilicate en opérant comme suit dans un récipient de capacité appropriée, le contenu dudit récipient étant maintenu sous agitation pendant toute la durée de l'opération.

Dans le récipient on introduisait 10 parties d'eau, puis 0,3 partie d'éther couronne "18 crown 6" et, après dissolution totale dudit éther couronne, on ajoutait 0,5 partie d'éther couronne "15 crown 5". Après dissolution du second éther couronne, on ajoutait alors au contenu du récipient 1 partie d'un aluminate de sodium renfermant 56 % d'$Al_2O_3$ et 37 % de $Na_2O$ et chauffait légèrement le mélange réactionnel pour dissoudre complètement l'aluminate. Après retour à température ambiante, on introduisait alors dans le

récipient 8,2 parties d'une suspension colloidale de silice renfermant 40 % de $SiO_2$ et 60 % d'eau.

On obtenait ainsi un gel d'aluminosilicate dont la composition molaire, rapportée à une mole d'$Al_2O_3$, était la suivante :

10 $SiO_2$ ; 1 $Al_2O_3$ ; 2,4 $Na_2O$ ; 0,2 "18 crown 6" ; 0,4"15 crown 5" ; 140 $H_2O$.

Le gel obtenu était soumis à un murissement à température ambiante pendant 24 heures dans un récipient fermé. Le gel muri était ensuite placé dans un autoclave et maintenu à 115 °C dans ce dernier pendant 192 heures pour former un produit cristallisé. Les cristaux formés étaient séparés du milieu réactionnel par filtration, puis lavés à l'eau distillée jusqu'à faible basicité (pH inférieur à 9) des eaux de lavage et enfin séchés à environ 60 °C dans une étuve.

Les cristaux séchés étaient ensuite calcinés à 600 °C pendant 4 heures afin d'éliminer les molécules des éthers couronnes utilisés comme agent struturant et d'obtenir la zéolithe.

Avant calcination, le produit cristallisé est un précurseur zéolithique de type faujasite qui consiste en un produit formé de domaines ayant une structure de symétrie cubique et de domaines ayant une structure de symétrie hexagonale. Le coefficient $\alpha$ mesuré par diffraction des rayons X est égal à 0,2.

La formule trouvée pour ledit produit, ramenée à une maille cubique de 192 tétraèdres, s'écrit

$$36,2\overset{+}{Na}\ ((SiO_2)_{156,5}\ (AlO_2)_{35,5})^{-35,5}\ 1,3(\text{"18 crown 6})\ 6,2(\text{"15 crown 5})\ 139H_2O.$$

La zéolithe formée par calcination du produit précurseur ci-dessus est aussi un produit formé de domaines correspondant à une faujasite cubique et de domaines correspondant à une faujasite hexagonale. Le coefficient $\alpha$ mesuré est égal à 0,2. La formule déterminée pour cette zéolithe, ramenée à une maille cubique de 192 tétraèdres, s'écrit à l'état anhydre

$$36,2\ \overset{+}{Na}\ ((SiO_2)_{156,5}\ (AlO_2)_{35,5})^{-35,5}$$

On retrouve dans la charpente de la zéolithe environ 80 % de la silice engagée.

EXEMPLE 12 :

Utilisation d'un agent structurant consistant en un mélange d'éthers couronnes "15 crown 5" et "18 crown 6"

En opérant dans des conditions analogues à celles de l'exemple 11, on préparait un gel aluminosilicate ayant, avant murissement, la composition molaire suivante rapportée à 1 mole d'$Al_2O_3$ :

10 $SiO_2$ ; 1 $Al_2O_3$ ; 2,2 $Na_2O$ ; O,3 "18 crown 6" ; 0,3 "15 crown 5" ; 140 $H_2O$.

Le gel était ensuite traité comme décrit dans l'exemple 11 pour produite la zéolithe.

Avant calcination, le produit cristallisé est un précurseur zéolithique de type faujasite qui consiste en un produit constitué de domaines ayant une structure de symétrie cubique et de domaines ayant une structure de symétrie hexagonale. Le coefficient $\alpha$ mesuré a une valeur égale à 0,6.

La formule déterminée pour ce précurseur zéolithique, ramenée à une maille cubique de 192 tétraèdres, est la suivante :

$$38,6\ \overset{+}{Na}\ ((SiO_2)_{154,1}\ (AlO_2)_{37,9})^{37,9-}4,5\ (18\ crown\ 6)\ 3,6\ (15\ crown\ 5)\ 139\ H_2O.$$

La zéolithe formée par calcination du produit précurseur ci-dessus est aussi un produit formé de domaines correspondant à une faujasite cubique et de domaines correspondant à une faujasite hexagonale. Le coefficient $\alpha$ mesuré a une valeur égale à 0,6.

La formule déterminée pour cette zéolithe, ramenée à une maille cubique de 192 tétraèdres, s'écrit à l'état anhydre

$$38,6\ \overset{+}{Na}\ [(SiO_2)_{154,1}\ (AlO_2)_{37,9}]^{37,9\ -}$$

EXEMPLE 13 :

Utilisation d'un agent structurant consistant en un mélange d'éthers couronnes "18 crown 6" et "15 crown 5".

En opérant dans des conditions analogues à celles de l'exemple 11, on préparait un gel d'aluminosilicate ayant, avant murissement, la composition molaire suivante rapportée à 1 mole d'$Al_2O_3$ :
10 $SiO_2$ ; 1 $Al_2O_3$ ; 2,4 $Na_2O$ ; 0,4 "18 crown 6" ; 0,2 "15 crown 5" ; 140 $H_2O$

Le gel était ensuite traité omme indiqué dans l'exemple 11 pour produire la zéolithe.

Avant calcination, le produit cristallisé est un précurseur zéolithique de type fauiasite qui consiste en un produit constitué de domaines ayant une structure de symétrie cubique et de domaines ayant une structure de symétrie hexagonale. Le coefficient $\alpha$ mesuré a une valeur égale à 0,8.

La formule déterminée pour ce précurseur zéolithique, ramenée à une maille cubique de 192 tétraèdres, est la suivante :

35,6 $\overset{+}{Na}$ $[(SiO_2)_{157,3}\ (AlO_2)_{34,7}]^{34,7-}$6,7(18 crown 6) 1,4(15 crown 5) 129 $H_2O$

La zéolithe formée par calcination du produit précurseur ci-dessus est aussi un produit formé de domaines correspondant à une faujasite cubique et de domaines correspondant à une faujasite hexagonale. Le coefficient $\alpha$ mesuré est égal à 0,8.

La formule déterminée pour cette zéolithe, ramenée à une maille cubique de 192 tétraèdres, s'écrit à l'état anhydre

36,6 $\overset{+}{Na}$ $[(SiO_2)_{157,3}\ (AlO_2)_{34,7}]^{34,7-}$

EXEMPLE 14

Utilisation d'un agent structurant consistant en un mélange d'éthers couronnes "18 crown 6" et "12 crown 4"

En opérant dans des conditions analogues à celles de l'exemple 11, on préparait un gel aluminosilicate ayant, avant murissement, la composition molaire suivant rapportée à 1 mole d'$Al_2O_3$ :
10 $SiO_2$ ; 1 $Al_2O_3$ ; 2,3 $Na_2O$ ; 0,2 "18 crown 6" ; 0,4 "12 crown 4" ; 140$H_2O$

Le gel était ensuite traité comme indiqué dans l'exemple 11 pour produire la zéolithe en faisant toutefois appel à un murissement de 24 heures à 20 °C et à une cristallisation de 12 jours à 100 °C.

Avant calcination, le produit cristallisé est un précurseur zéolithique du type faujasite qui consiste en un produit formé de domaines ayant une structure de symétrie cubique et de domaines ayant une structure de symétrie hexagonale. Le coefficient $\alpha$ mesuré a une valeur de 0,55.

La formule déterminée pour ce précurseur zéolithique, ramenée à une maille cubique de 192 tétraèdres, est la suivante :

37,2 $\overset{+}{Na}$ $[(SiO_2)_{156,5}\ (AlO_2)_{35,5}]^{35,5-}$5,9 (18 crown 6) 2,4 (12 crown 4) 140 ($H_2O$)

La zéolithe formée par calcination du produit précurseur ci-dessus est aussi un produit présentant des domaines correspondant à une faujasite cubique et des domaines correspondant à une faujasite hexagonale. Le coefficient $\alpha$ mesuré a une valeur égale à 0,55.

La formule déterminée pour cette zéolithe, ramenée à une maille cubique de 192 tétraèdres, s'écrit à l'état anhydre

37,2 $\overset{+}{Na}$ $[(SiO_2)_{156,5}\ (AlO_2)_{35,5}]^{35,5-}$

EXEMPLE 15

Utilisation d'un agent structurant consistant en un mélange d'éther couronne "15 crown 5" et de "$POE_{200}$"

En opérant contre indiqué dans l'exemple 11 mais en utilisant un agent structurant formé de quantités équimoléculaires d'éther couronne "15 crown 5" et d'un costructurant acyclique désigné en abrégé par "$POE_{200}$" et consistant en le monoéther méthylique d'un polyoxyéthylène glycol de masse moléculaire

moyenne en nombree Mn égale à 200, on préparait un gel aluminosilicate qui, avant murissement, avait la composition suivant rapportée à une mole d'$Al_2O_3$ :

10 $SiO_2$ ; 1 $Al_2O_3$ ; 2,3 $Na_2O$ ; 0,2 "15 crown 5" ; 0,2 "$POE_{200}$" ; 140 $H_2O$

Le gel était ensuite traité comme indiqué dans l'exemple 11 pour produire la zéolithe en effectuant toutefois le murissement à 25 °C pendant 24 heures et la cristallisation à 100 °C pendant 12 jours.

Avant calcination, le produit cristallisé est un précurseur zéolithique de type faujasite présentant une structure de symétrie cubique.

La formule déterminée pour ce précurseur zéolithique, ramenée à une maille cubique de 192 tétraèdres, est la suivant :

$38{,}1\ Na^+ [(SiO_2)_{155}\ (AlO_2)_{37}]^{37-} 5{,}6(15crown5)2(POE_{200})153H_2O$

La zéolithe formée par calcination du produit précurseur ci-dessus est une zéolithe de type faujasite présentant une struture de symétrie cubique.

La formule déterminée pour cette zéolithe, ramenée à une maille cubique de 192 tétraèdres, s'écrit à l'état anhydre

$38{,}1\ Na^+ [(SiO_2)_{155}\ (AlO_2)_{37}]^{37-}$

On retrouve dans la charpente de la zéolithe 85% environ de la silice engagée.

EXEMPLE 16

Utilisation d'un agent structurant consistant en un mélange d'éther couronne "15 crown 5" et d'éthylène glycol

En opérant comme indiqué dans l'exemple 11 mais en utilisant un agent structurant formé d'un mélange d'éther couronne "15 crown 5" et d'un costructurant acyclique désigné en abrégé par "EG" et consistant en éthylène glycol, on préparait un gel aluminosilicate qui, avant murissement, avait la composition suivante rapportée à 1 mole d'$Al_2O_3$ :

10 $SiO_2$; 1 $Al_2O_3$; 2,2 $Na_2O$; 0,2" 15crown 5"; 2"EG";140$H_2O$

Le gel était ensuite traité comme indiqué dans l'exemple 11 pour produire la zéolithe en effectuant toutefois le murissement à 20 °C pendant 24 heures et la cristallisation à 100 °C pendant 12 jours.

Avant calcination, le produit cristallisé est un précurseur zéolithique du type faujasite présentant une structure de symétrie cubique.

La formule déterminée pour ce précurseur zéolithique, ramenée à une maille cubique de 192 tétraèdres, est la suivante :

$38{,}5\ Na^+ [(SiO_2)_{155,1}\ (AlO_2)_{36,8}]^{36,8-} 5{,}4(15crown5)\ 1{,}7(EG)152(H_2O)$

La zéolithe formée par calcination du produit précurseur ci-dessus est une zéolithe de type faujasite présentant une structure de symétrie cubique.

La formule déterminée pour cette zéolithe, ramenée à une maille cubique de 192 tétraèdres, s'écrit à l'état anhydre

$38{,}5\ Na^+ [(SiO_2)_{155,1}\ (AlO_2)_{36,8}]^{36,8-}$

EXEMPLE 17

Utilisation d'un agent structurant consistant en un mélange d'éther couronne "18 crown 6" et d'éthylène glycol

En opérant comme indiqué dans l'exemple 11 mais en utilisant un agent structurant formé d'un mélange d'éther couronne "18 crown 6" et d'un costructurant acyclique désigné en abrégé par "EG" et consistant en éthylène glycol, on préparait un gel aluminosilicate qui, avant murissement, avait la composition suivante rapportée à 1 mole d'$Al_2O_3$ :

10 $SiO_2$ ; 1 $Al_2O_3$ ; 2,2 $Na_2O$ ; 0,2 "18 crown 6" ; 2 "EG" ; 140 $H_2O$.

Le gel était ensuite traité comme indiqué dans l'exemple 11 pour produire la zéolithe en effectuant toutefois le murissement à 25°C pendant 24 heures et la cristallisation à 100°C pendant 12 jours.

Avant calcination, le produit cristallisé est un précurseur zéolithique du type faujasite formé de domaines ayant une structure de symétrie cubique et de domaines ayant une structure de symétrie hexagonale.

Le coefficient $\alpha$ mesuré a une valeur égale à 0,85. Le rapport Si : Al de la charpente dudit précurseur, déterminé par RMN du silicium 29 avec rotation à l'angle magique, est voisin de 4.

La zéolithe obtenue par calcination du produit précurseur ci-dessus est une zéolithe du type faujasite présentant des domaines correspondant à une faujasite cubique et des domaines correspondant à une faujasite hexagonale. Le coefficient $\alpha$ mesuré à une valeur égale à 0,85. Le rapport Si : Al de la charpente de la zéolithe, déterminé par RMN du silicium 29 avec rotation à l'angle magique, est voisin de 4.

EXEMPLE 18

Utilisation d'un agent structurant consistant en un mélange d'éther couronne "18 crown 6" et de "$POE_{350}$".

En opérant comme indiqué dans l'exemple 11 mais en utilisant un agent structurant formé d'un mélange d'éther couronne "18 crown 6" et d'un costructurant désigné en abrégé par "$POE_{350}$" et consistant en le monoéther méthylique d'un polyoxyéthylène glycol de masse moléculaire moyenne en nombre Mn égale à 350, on préparait un gel aluminosilicate qui, avant murissement, avait la composition suivante rapportée à 1 mole d'$Al_2O_3$ :

10 $SiO_2$ ; 1 $Al_2O_3$ ; 2,3 $Na_2O$ ; 0,2 "18 crown 6" ; 0,2 "$POE_{350}$" ; 140 $H_2O$.

Le gel était ensuite traité comme indiqué dans l'exemple 11 pour produire la zéolithe en effectuant toutefois le murissement à 20°C pendant 24 heures et la cristallisation à 100°C pendant 12 jours.

Avant calcination, le produit cristallisé est un précurseur zéolithique du type faujasite formé de domaines ayant une structure de symétrie cubique et de domaines ayant une structure de symétrie hexagonale. Le coefficient $\alpha$ mesuré est proche de 0,8.

La zéolithe formée par calcination du produit précurseur ci-dessus est une zéolithe du type faujasite présentant des domaines correspondant à une faujasite cubique et des domaines correspondant à une faujasite hexagonale. Le coefficient $\alpha$ mesuré est proche de 0,8. Le rapport Si : Al de la charpente de la zéolithe, déterminé par RMN du silicium 29 avec rotation à l'angle magique, est proche de 4.

**Revendications**

**1.** Procédé de préparation de zéolithes appartenant à la famille structurale de la faujasite et présentant un rapport Si:Al supérieur à 1 et pouvant dépasser 3, ledit procédé étant du type dans lequel on réalise tout d'abord un mélange réactionnel ayant un pH supérieur à 10 et renfermant de l'eau, une source de silicium tétravalent, une source d'aluminium trivalent, une source d'ions hydroxydes sous la forme d'une base forte minérale ou organique et un agent structurant ST de manière à produire un gel d'aluminosilicate ayant la composition voulue pour permettre sa cristallisation en un composé de la famille structurale de la faujasite, puis on maintient le gel obtenu à une température au plus égale à 150°C et sous une pression au moins égale à la pression autogène du mélange constitué par ledit gel pendant une durée suffisante pour effectuer la cristallisation de ce gel en un précurseur de la zéolithe consistant en la zéolithe emprisonnant l'agent structurant ST dans ses cavités et l'on soumet ledit précurseur à une calcination pour détruire ledit agent structurant et produire la zéolithe, et se caractérisant en ce que l'agent structurant ST consiste en au moins un composé MC appartenant au groupe formé par les macrocycles et macropolycycles carbonés qui renferment dans le cycle ou les cycles des hétéroatomes choisis parmi l'oxygène, l'azote, le silicium et le soufre et qui contiennent 10 à 24 atomes par cycle.

**2.** Procédé selon la revendication 1, caractérisé en ce que la quantité d'agent structurant ST dans le mélange réactionnel destiné à former le gel est telle que le rapport molaire $ST:Al^{III}$ soit situé de 0,1 à 4, ledit rapport molaire allant de préférence de 0,1 à 1 et tout particulièrement de 0,2 à 0,5.

**3.** Procédé selon la revendication 1 ou 2, caractérisé en ce que les ingrédients constituant le mélange réactionnel donnant naissance au gel d'aluminosilicate sont utilisés en quantités telles que ledit gel ait, en termes de rapports molaires, une composition telle que $Si^{IV}: Al^{III} = 2$ à 20, $OH^{-} :Al^{III} = 0,5$ à 8, $ST:Al^{III} = 0,1$ à 4 et $H_2O : Al^{III} = 40$ à 200.

4. Procédé selon la revendication 3, caractérisé en ce que ladite composition est telle que $Si^{IV}:Al^{III} = 4$ à 10, $OH^{-} : Al^{III} = 1$ à 6, $ST:Al^{III} = 0{,}1$ à 1 et $H_2O : Al^{III} = 50$ à 150.

5. Procédé selon l'une des revendications 1 à 4, caractérisé en ce que l'agent structurant ST consiste en au moins un composé MC choisi dans le groupe formé par a) les éthers couronnes dont le cycle renferme 10 à 24 atomes et comporte uniquement des atomes d'oxygène comme hétéroatomes en nombre au moins égal à 4, b) les composés dérivant des éthers couronnes définis sous a) par remplacement, en partie ou en totalité, des atomes d'oxygène du cycle par des substituants choisis parmi les atomes de soufre et les groupements $>$NH, $>$NR et

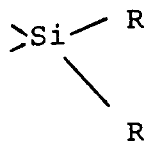

dans lesquels R est un radical hydrocarbyle en $C_1$ à $C_4$ et c) les macropolycycles carbonés choisis parmi les polyoxadiazabicycloalcanes dont chaque cycle renferme 10 à 18 atomes et possède au moins deux atomes d'oxygène en plus des deux atomes d'azote.

6. Procédé selon l'une des revendications 1 à 5, caractérisé en ce que l'agent structurant ST résulte de l'association d'au moins un composé MC avec un costructurant CS consistant en au moins un composé acyclique oxygéné choisi parmi les composés de formule

$$R_1 - O - ( C_mH_{2m-1}\ X - O )_g R_2$$

dans laquelle $R_1$ et $R_2$, identiques ou différents, représentent chacun un atome d'hydrogène ou un radical alcoyle en $C_1$ à $C_4$, X désigne un atome d'hydrogène ou un radical OH, m est égal à 2 ou 3 et peut être différent d'un motif à l'autre et g est un nombre allant de 1 à 12.

7. Procédé selon la revendication 6, caractérisé en ce que le costructurant CS consiste en au moins un composé choisi parmi le méthyléther d'éthylèneglycol, le diméthyléther d'éthylèneglycol, l'éthylèneglycol, le propylèneglycol, les polyéthylèneglycols de formule

$$HO - ( CH_2CH_2O )_{g_1} H$$

et leurs éthers méthyliques de formule

$$CH_3O - ( CH_2CH_2O )_{g_1} H$$

et les polypropylèneglycols de formule

$$OH - ( CH_2CH_2CH_2O )_{g_1} H$$

avec dans ces formules $g_1$ représentant un nombre allant de 2 à 9.

8. Procédé selon la revendication 6 ou 7, caractérisé en ce que la quantité d'agent structurant, résultant de l'association d'au moins un composé MC et du costructurant CS, présente dans le mélange réactionnel destiné à former le gel et la composition dudit agent structurant sont telles que le rapport

molaire agent structurant : $Al^{III}$ aille de 0,1 à 4 et que le rapport molaire MC : $Al^{III}$ soit égal ou supérieur à 0,05.

**9.** Procédé selon la revendication 8, caractérisé en ce que la quantité d'agent structurant et sa composition sont telles que le rapport molaire agent structurant: $Al^{III}$ aille de 0,2 à 2 et que le rapport molaire MC : $Al^{III}$ soit égal ou supérieur à 0,1.

**10.** Procédé selon l'une des revendications 1 à 5, caractérisé en ce que l'agent structurant consiste en au moins un composé $MC_1$ choisi parmi les composés MC qui sont des macrocycles ayant 10 à 17 atomes dans le cycle ou des macropolycycles ayant 10 à 18 atomes dans chaque cycle, de manière à obtenir une zéolithe ayant la structure de symétrie cubique de la faujasite.

**11.** Procédé selon l'une des revendications 6 à 9, caractérisé en ce que l'agent structurant résulte de l'association d'un costructurant CS avec au moins un composé $MC_1$ choisi parmi les composé MC qui sont des macrocycles ayant 10 à 17 atomes dans le cycle ou des macropolycycles ayant 10 à 18 atomes dans chaque cycle, de manière à obtenir une zéolithe ayant la structure de symétrie cubique de la faujasite.

**12.** Procédé selon l'une des revendications 1 à 5, caractérisé en ce l'agent structurant consiste en au moins un composé $MC_2$ choisi parmi les composés MC qui sont des macrocycles renfermant au moins 18 atomes dans le cycle, de manière à obtenir une zéolithe ayant la structure de symétrie hexagonale des polytypes hexagonaux de la faujasite.

**13.** Procédé selon l'une des revendications 1 à 12, caractérisé en ce que la source de silicium tétravalent est choisie dans le groupe constitué par les silices finement divisées sous la forme d'hydrogels, d'aérogels ou de suspensions colloidales, les silicates hydrosolubles tels que les silicates alcalins comme le silicate de sodium, et les esters siliciques hydrolysables tels que les orthosilicates de tétraalcoyles de formule $Si(OR)_4$ dans laquelle R désigne un radical alcoyle en $C_1$ à $C_4$.

**14.** Procédé selon l'une des revendications 1 à 13, caractérisé en ce que la source d'aluminium trivalent est choisie dans le groupe constitué par les sels d'aluminium, les oxydes et hydroxydes d'aluminium, les aluminates et notamment les aluminates alcalins tel que l'aluminate de sodium, et les esters d'aluminium tels que les aluminium trialcoxydes de formule $Al\ (OR)_3)$ dans laquelle R est un radical alcoyle en $C_1$ à $C_4$.

**15.** Procédé selon l'une des revendications 1 à 14, caractérisé en ce que la source d'ions hydroxydes est choisie dans le groupe formé par les hydroxydes des métaux alcalins du groupe IA de la Classification Périodique des Eléments, les hydroxydes des métaux alcalino-terreux Ca, Sr et Ba et les hydroxydes d'ammonium quaternaires.

**16.** Procédé selon l'une des revendications 1 à 15, caractérisé en ce que le mélange réactionnel renferme des cations $M^{n+}$ d'au moins un métal M, de valence n, autre que les métaux dont les hydroxydes sont des bases fortes, en quantité globale telle que le rapport molaire $M^{n+}$ : $Al^{III}$ dans ledit mélange soit au plus égal à 0,4 et de préférence au plus égal à 0,3, lesdits cations $M^{n+}$ étant en particulier tels que $Co^{++}$, $Cd^{++}$, $Mg^{++}$ et $Ag^{+}$.

**17.** Procédé selon l'une des revendications 1 à 16, caractérisé en ce qu'avant de procéder à la cristallisation du gel, on ajoute au milieu réactionnel destiné à former ledit gel des germes de cristallisation en quantité allant de 0,1 % à 10 % en poids dudit milieu réactionnel, lesdits germes de cristallisation étant notamment produits par broyage d'une zéolithe de même nature que la phase cristalline à produire ou encore par synthèse à partir d'une solution de nucléation appropriée.

**18.** Procédé selon l'une des revendications 1 à 16, caractérisé en ce qu'avant de procéder à la cristallisation du gel, on soumet ledit gel à un murissement, dans une enceinte fermée, à une température inférieure à la température de cristallisation pendant une durée allant d'environ 6 heures à environ 6 jours.

**19.** Procédé selon l'une des revendications 1 à 18, caractérisé en ce que la cristallisation du gel d'aluminosilicate, avec ou sans germe, est réalisée en maintenant ledit gel à une température allant de 90 °C à 120 °C pendant une durée comprise entre 2 heures et quinze jours.

**20.** Procédé selon l'une des revendications 1 à 19, caractérisé en ce que la calcination du précurseur de la zéolithe est réalisée à une température supérieure à 300 °C et de préférence comprise entre 400 °C et 700 °C.

**21.** Précurseurs de zéolithes de la famille structurale de la faujasite consistant en aluminosilicates ayant un rapport Si:Al supérieur à 1 et pouvant dépasser 3 et qui, d'une part présentent une structure de symétrie cubique comparable à celle de la faujasite ou bien une structure de symétrie hexagonale comparable à celle des polytypes hexagonaux de la faujasite ou bien comportent des domaines présentant une structure de symétrie cubique comparable à celle de la faujasite et des domaines présentant une structure de symétrie hexagonale comparable à celle des polytypes hexagonaux de la faujasite, et, d'autre part, possèdent des cavités ou des canaux emprisonnant des molécules d'un agent structurant, ST caractérisés en ce que l'agent structurant ST consiste en au moins un composé MC, choisi dans le groupe formé par les macrocycles et les macropolycycles carbonés qui renferment dans le cycle ou les cycles des hétéroatomes choisis parmi O, N, Si et S et contiennent 10 à 24 atomes par cycle, ou résulte de l'association d'au moins un composé MC avec un costructurant CS consistant en au moins un composé acyclique oxygéné choisi parmi les composés de formule

$$R_1 - O - \left[ C_mH_{2m-1}\ X - O \right]_g - R_2$$

dans laquelle $R_1$ et $R_2$, identiques ou différents, représentent chacun un atome d'hydrogène ou un radical alcoyle en $C_1$ à $C_4$, X désigne un atome d'hydrogène ou un radical OH, m est égal à 2 ou 3 et peut être différent d'un motif à l'autre et g est un nombre allant de 1 à 12.

**22.** Précurseurs selon la revendication 21, caractérisé en ce que le ou les composés MC que renferme l'agent structurant ST sont choisis dans le groupe formé par a) les éthers couronnes dont le cycle renferme 10 à 24 atomes et comporte uniquement des atomes d'oxygène contre hétéroatomes en nombre au moins égal à 4, b) les composés dérivant des éthers couronnes définis sous a) par remplacement partiel ou total des atomes d'oxygène du cycle par des substituants choisis parmi les atomes de soufre et les groupements >NH, >NR et

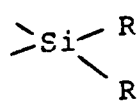

dans lesquels R est un radical hydrocarbyle en $C_1$ à $C_4$ et c) les macropolycycles carbonés choisis parmi les polyoxadiazabicycloalcanes dont chaque cycle renferme 10 à 18 atomes et possède au moins deux atomes d'oxygène en plus des deux atomes d'azote.

**23.** Précurseurs selon la revendication 21 ou 22, caratérisé en ce que, outre le ou les composés MC, l'agent structurant ST renferme également un costructurant CS consistant en au moins un composé choisi parmi le méthyléther d'ethylèneglycol, le diméthyléther d'éthylèneglycol, l'éthylèneglycol, le propylène glycol, les polyéthylèneglycols de formule

$$HO - (CH_2CH_2O)_{g_1} - H$$

et leurs éthers méthyliques de formule

$$CH_3—O—(CH_2CH_2O)_{g_1}—H$$

et les propylèneglycols de formule

$$HO—(CH_2CH_2CH_2O)_{g_1}—H$$

avec dans ces formules $g_1$ représentant un nombre allant de 2 à 9.

**24.** Précurseurs selon l'une des revendications 21 à 23, présentant une structure de symétrie cubique comparable à celle de la faujasite, caractérisés en ce qu'ils présentent un diagramme de diffraction des rayons X comparable à celui défini dans le tableau III

TABLEAU III

| $2\theta$ (degrés) | $d_{hkl}$ ($10^{-1}$nm) | (h k l) | I/Io |
|---|---|---|---|
| 6,26 | 14,10 ± 0,2 | (1 1 0) | FF |
| 10,23 | 8,65 | (2 2 0) | f |
| 12,01 | 7,35 | (3 1 1) | mF |
| 15,77 | 5,615 ± 0,05 | (3 3 1) | F |
| 18,81 | 4,713 | (5 1 1) | m |
| 20,49 | 4,331 | (4 4 0) | mF |
| 22,93 | 3,875 | (6 2 0) | f |
| 23,77 | 3,740 | (5 3 3) | mF |
| 25,15 | 3,537 | (4 4 4) | ff |
| 25,93 | 3,433 | (5 5 1) | ff |
| 27,19 | 3,276 | (6 4 2) | mF |
| 27,93 | 3,191 ± 0,008 | (7 3 1) | ff |
| 29,81 | 2,994 | (7 3 3) | f |

et sont représentés par une formule qui, ramenée à une maille de la structure cubique, s'écrit

$(vM_1^{q+})\ (wM^{n+})\ ((SiO_2)_{192-x}\ (AlO_2)_x)^{x-}\ (pST_1)\ (zH_2O)$

et dans laquelle $M_1^{q+}$ désigne un cation q-valent d'un métal du groupe IA de la Classification Périodique des Eléments (q = 1) ou d'un métal alcalinoterreux choisi parmi Ca, Sr et Ba (q = 2) ou un cation monovalent renfermant de l'azote (q = 1), notamment ammonium ou ammonium quaternaire, $M^{n+}$ représente un cation d'un métal M de valence n autre qu'un cation $M_1^{q+}$,
x, z, v et w sont des nombres tels que $30 \leqq x \leqq 96$, $z \geqq 0$ et dépendant de l'état d'hydratation du précurseur, $O < v \leqq \frac{x}{q}$ et $O \leqq W \leqq \frac{x}{n}$ avec $qv + wn \geqq x$,
p est un nombre tel que $4 \leqq p \leqq 10$ et $ST_1$ représente au moins un composé $MC_1$ choisi parmi les composés MC qui sont des macrocycles ayant de 10 à 17 atomes dans le cycle ou des macropolycycles renfermant 10 à 18 atomes dans chaque cycle ou un mélange d'au moins un composé $MC_1$ et du costructurant CS.

**25.** Précurseurs selon la revendication 21 ou 22, présentant une structure de symétrie hexagonale comparable à celle des polytypes hexagonaux de la faujasite, caractérisés en ce qu'ils présentent un diagramme de diffraction des rayons X comparable à celui donné dans le tableau IV

TABLEAU IV

| 2θ (degrés) | dhkl ($10^{-1}$nm) | (h k l) | I/Io |
|---|---|---|---|
| 5,88 | 15,01 ± 0,2 | (1 0 0) | FF |
| 6,24 | 14,15 | (0 0 2) | F |
| 6,65 | 13,28 | (1 0 1) | F |
| 10,12 | 8,73 ± 0,08 | (1 ) | f |
| 11,01 | 8,03 | (1 0 3) | mf |
| 11,93 | 7,41 | (1 1 2) | mF |
| 13,58 | 6,515 | (2 0 2) | ff |
| 15,57 | 5,686 ± 0,05 | (0 0 5) | mF |
| 15,86 | 5,580 | (2 1 1) | mf |
| 16,70 | 5,305 | (1 0 5) | mf |
| 17,15 | 5,165 | (2 0 4) | F |
| 18,16 | 4,88 | (2 1 3) | mf |
| 18,71 | 4,74 | (1 1 5) | mf |
| 19,65 | 4,509 | (1 0 6) | mF |
| 20,42 | 4,345 | (2 2 0) | F |
| 22,14 | 4,011 | (3 1 2) | mF |
| 22,71 | 3,912 | (1 0 7) | mf |
| 23,32 | 3,811 | (3 1 3) | mf |
| 23,60 | 3,766 | (3 0 5) | mf |
| 24,68 | 3,604 | (3 1 4) | mf |
| 25,81 | 3,449 | (2 2 5) | f |
| 26,49 | 3,362 | (2 1 5) | f |

et sont représentés par une formule qui, ramenée à une maille hexagonale de la structure cristalline, s'écrit

$(u\ M_1^{q+})\ (rM^{n+})\ ((SiO_2)_{96-y}\ (AlO_2)_y)^{y-}\ (j\ ST_2)\ (t\ H_2O)$

avec dans cette formule $M_1^{q+}$ désignant un cation q-valent d'un métal du groupe IA de la Classification Périodique des Eléments (q = 1) ou d'un métal alcalinoterreux choisi parmi Ca, Sr et Ba (q = 2) ou un cation monovalent renfermant de l'azote (q = 1), notamment ammonium ou ammonium quaternaire, $M^{n+}$ représentant un cation d'un métal M de valence n autre qu'un cation $M_1^{q+}$, y, u, r et t étant des nombres tels que 15≦ y ≦ 48, t ≧ O et dépendant de l'état d'hydratation du précurseur, O ≦ u ≦ $\frac{y}{q}$ et O ≦ r ≦ $\frac{y}{n}$ avec q u + n r ≧ y, j étant un nombre tel que 2 ≦ j ≦ 5 et $ST_2$ représentant au moins un composé $MC_2$ choisi parmi les composés MC qui sont des macrocycles renfermant au moins 18 atomes dans le cycle.

**26.** Application des précurseurs selon l'une des revendications 21 à 25 à la production, par calcination desdits précurseurs, de zéolithes appartenant à la famille structurale de la faujasite et présentant un rapport Si : Al supérieur à 1 et pouvant dépasser 3, lesdites zéolithes ayant soit une structure de symétrie cubique comparable à celle de la faujasite ou une structure de symétrie hexagonale comparable à celle des polytypes hexagonaux de la faujasite ou bien comportant des domaines présentant une structure de symétrie cubique comparable à celle de la faujasite et des domaines présentant une structure de symétrie hexagonale comparable à celles des polytypes hexagonaux de la faujasite, ces zéolithes étant utilisables, directement ou après échange de cations, comme adsorbants ou comme composants de catalyseurs.

**27.** Application selon la revendication 26 à la production de zéolithes ayant la structure de symétrie cubique de la faujasite par calcination des précurseurs selon la revendication 24, les zéolithes obtenues ayant une valeur du paramètre a de la maille cubique comprise entre 2,4 et 2,5 nm, présentant un diagramme de diffraction des rayons X comparable à celui donné dans le tableau I

TABLEAU I

| $2\theta$ (degrés) | $d_{hkl}$ $(10^{-1})$nm | (hkl) | I/Io |
|---|---|---|---|
| 6,245 | 14,14 ± 0,2 | (1 1 1) | FF |
| 10,205 | 8,66 | (2 2 0) | F |
| 11,965 | 7,39 | (3 1 1) | mF |
| 15,735 | 5,627 ± 0,05 | (3 3 1) | F |
| 18,775 | 4,721 | (5 1 1) | f |
| 20,465 | 4,335 | (4 4 0) | mf |
| 22,895 | 3,881 | (6 2 0) | f |
| 23,755 | 3,727 | (5 3 3) | mF |
| 25,105 | 3,544 | (4 4 4) | ff |
| 25,965 | 3,428 | (5 5 1) | ff |
| 27,175 | 3,279 | (6 4 2) | mF |
| 27,885 | 3,196 ± 0,008 | (7 3 1) | ff |
| 29,765 | 2,999 | (7 3 3) | f |

et répondant à une formule qui, ramenée à une maille de la structure cubique, s'écrit

$(v\ M_1^{q+})\ (wM^{n+})\ ((SiO_2)_{192-x}\ (AlO_2)_x)^{x-}\ (z\ H_2O)$

et dans laquelle $M_1^{q+}$, $M^{n+}$, x, z, v, et w ont les significations données à la revendication 24.

**28.** Application selon la revendication 25 à la production de zéolithes ayant la structure de symétrie hexagonale des polytypes hexagonaux de la faujasite par calcination des précurseurs selon la revendication 25, les zéolithes obtenues ayant des paramètres a, b, c de la maille hexagonale de ladite structure tels que 1,72 nm < a = b < 1,77 nm et 2,80 nm < c < 2,89 nm, présentant un diagramme de diffraction des rayons X comparable à celui donné dans le tableau II

TABLEAU II

| $2\theta$ (°) | $d_{hkl}$ ($10^{-1}$nm) | (h k l) | I/Io |
|---|---|---|---|
| 5,88 | 15,03 ± 0,2 | (1 0 0) | FF |
| 6,23 | 14,2 | (0 0 2) | FF |
| 6,66 | 13,3 | (1 0 1) | F |
| 8,40 | 10,52 | (1 0 2) | f |
| 10,19 | 8,68 ± 0,08 | (1 1 0) | F |
| 11,06 | 7,99 | (1 0 3) | mF |
| 11,78 | 7,51 | (2 0 0) | mF |
| 11,95 | 7,40 | (1 1 2) | mF |
| 13,49 | 6,56 | (2 0 2) | ff |
| 15,06 | 5,88 ± 0,05 | (2 0 3) | f |
| 15,58 | 5,68 | (0 0 5) | F |
| 15,89 | 5,57 | (2 1 1) | f |
| 16,73 | 5,29 | (1 0 5) | f |
| 17,18 | 5,16 | (2 0 4) | F |
| 18,22 | 4,87 | (2 1 3) | f |
| 18,79 | 4,72 | (1 1 5) | f |
| 19,67 | 4,51 | (1 0 6) | f |
| 20,45 | 4,34 | (2 2 0) | mF |
| 22,22 | 4,00 | (3 1 2) | f |
| 22,75 | 3,91 | (1 0 7) | f |
| 23,30 | 3,82 | (3 1 3) | f |
| 23,66 | 3,76 | (3 0 5) | F |
| 24,75 | 3,59 | (3 1 4) | f |
| 25,83 | 3,45 | (2 2 5) | f |
| 26,52 | 3,36 | (2 1 5) | f |
| 27,16 | 3,28 | (4 1 0) | f |
| 28,77 | 3,103 ± 0,008 | (3 2 4) | f |
| 30,38 | 2,942 | (4 0 6) | ff |
| 30,89 | 2,894 | (3 3 0) | f |
| 31,20 | 2,866 | (5 0 3) | f |
| 31,56 | 2,834 | (3 3 2) | ff |

et répondant à une formule qui, ramenée à une maille de la structure hexagonale, s'écrit

$(u\ M_1^{q+})\ (r\ M^{n+})\ ((SiO_2)_{96-y}\ (AlO_2)_y)^{y-}\ (t\ H_2O)$

et dans laquelle les symboles $M_1^{q+}$, $M^{n+}$, y, t, u et r ont les significations données à la revendication 25.

## Claims

**1.** Method of preparing zeolites belonging to the structural family of faujasite and having Si:Al ratios which are greater than 1 and may exceed 3, the said method being of the type in which, first of all, a reaction mixture having a pH greater than 10 and including water, a source of tetravalent silicon, a source of trivalent aluminium, a source of hydroxide ions in the form of a strong mineral or organic base, and a structuring agent ST is formed so as to produce an aluminosilicate gel having the desired composition to enable it to be crystallized into a compound of the structural family of faujasite, then the gel obtained is kept at a temperature of at least 150 °C and under a pressure of at least the autogenous pressure of the mixture constituted by the said gel for a period of time long enough to crystallize the gel into a precursor of the zeolite consisting of the zeolite with the structuring agent ST trapped in its cavities, and the said precursor is calcined to destroy the said structuring agent and to produce the zeolite, characterized in that the structuring agent ST consists of at least one compound MC belonging to the group constituted by carbon macrocycles and macropolycycles of which the ring or rings include heteroatoms selected from oxygen, nitrogen, silicon and sulphur, and which contain 10 to 24 atoms per ring.

**2.** Method according to Claim 1, characterized in that the quantity of the structuring agent ST in the reaction mixture which is intended to form the gel is such that the molar ratio $ST:Al^{III}$ is between 0.1 and 4, the said molar ratio preferably being from 0.1 to 1 and most preferably from 0.2 to 0.5.

**3.** Method according to Claim 1 or Claim 2, characterized in that the ingredients which constitute the reaction mixture and which give rise to the aluminosilicate gel are used in quantities such that the said gel has a composition, in terms of molar ratios, such that $Si^{IV}:Al^{III}$ = 2 to 20, $OH^{-}:Al^{III}$ = 0.5 to 8, $ST:Al^{III}$ = 0.1 to 4 and $H_2O : Al^{III}$ = 40 to 200.

**4.** Method according to Claim 3, characterized in that the said composition is such that $Si^{IV} : Al^{III}$ = 4 to 10, $OH^{-} : Al^{III}$ = 1 to 6, $ST : Al^{III}$ = 0.1 to 1 and $H_2O : Al^{III}$ = 50 to 150.

**5.** Method according to any one of Claims 1 to 4, characterized in that the structuring agent ST consists of at least one compound MC selected from the group constituted by a) crown ethers of which the rings include 10 to 24 atoms and comprise solely oxygen atoms as heteroatoms, the number of oxygen atoms being at least 4, b) compounds derived from the crown ethers defined under a) by the substitution of some or all of the oxygen atoms of the ring by substituents selected from sulphur atoms and >NH, >NR and

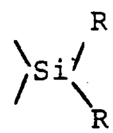

groups in which R is a $C_1$ to $C_4$ hydrocarbon radical, and c) carbon macropolycycles selected from polyoxadiazabicycloalkanes of which each ring includes 10 to 18 atoms and has at least two oxygen atoms in addition to the two nitrogen atoms.

**6.** Method according to any one of Claims 1 to 5, characterized in that the structuring agent ST results from the association of at least one compound MC with a costructuring agent CS consisting of at least one oxygenated acyclic compound selected from compounds of the formula:

$$R_1-O-(C_mH_{2m-1}X-O)_g-R_2$$

in which $R_1$ and $R_2$ are the same or different and each represents a hydrogen atom or a $C_1$ to $C_4$ alkyl radical, X indicates a hydrogen atom or an OH radical, m is 2 or 3 and may differ from one structure to another, and g is a number from 1 to 12.

**7.** Method according to Claim 6, characterized in that the costructuring agent CS consists of at least one compound selected from ethylene glycol methyl ether, ethylene glycol dimethyl ether, ethylene glycol, propylene glycol, polyethylene glycols of the formula:

$$HO-(CH_2CH_2O)_{g1}-H$$

and their methyl ethers of the formula:

$$CH_3O-(CH_2CH_2O)_{g1}-H$$

and polypropylene glycols of the formula:

$$OH-(CH_2CH_2CH_2O)_{g1}-H,$$

g1 representing a number from 2 to 9 in these formulae.

**8.** Method according to Claim 6 or Claim 7, characterized in that the quantity of structuring agent resulting from the association of at least one compound MC with the costructuring agent CS present in the reaction mixture which is intended to form the gel, and the composition of the said structuring agent, are such that the molar ratio of structuring agent : $Al^{III}$ is from 0.1 to 4 and that the molar ratio of MC : $Al^{III}$ is equal to or greater than 0.05.

**9.** Method according to Claim 8, characterized in that the quantity of structuring agent and its composition are such that the molar ratio of structuring agent : $Al^{III}$ is from 0.2 to 2 and that the molar ratio of MC : $Al^{III}$ is equal to or greater than 0.1.

**10.** Method according to any one of Claims 1 to 5, characterized in that the structuring agent consists of at least one compound $MC_1$ selected from the compounds MC which are macrocycles of which the rings have 10 to 17 atoms or macropolycycles having 10 to 18 atoms in each ring, so as to obtain a zeolite having the cubic symmetry structure of faujasite.

**11.** Method according to any one of Claims 6 to 9, characterized in that the structuring agent results from the association of a costructuring agent CS with at least one compound $MC_1$ selected from the compounds MC which are macrocycles of which the rings have 10 to 17 atoms or macropolycycles having 10 to 18 atoms in each ring, so as to obtain a zeolite having the cubic symmetry structure of faujasite.

**12.** Method according to any one of Claims 1 to 5, characterized in that the structuring agent consists of at least one compound $MC_2$ selected from the compounds MC which are macrocycles of which the rings include at least 18 atoms, so as to obtain a zeolite having the hexagonal symmetry structure of the hexagonal polytypes of faujasite.

**13.** Method according to any one of Claims 1 to 12, characterized in that the source of tetravalent silicon is selected from the group constituted by finely divided silicas in the form of hydrogels, aerogels or colloidal suspensions, water-soluble silicates such as alkali-metal silicates, for example, sodium silicate, and hydrolysable silicon esters such as tetraalkyl orthosilicates of the formula $Si(OR)_4$ in which R indicates an $C_1$ to $C_4$ alkyl radical.

**14.** Method according to any one of Claims 1 to 13, characterized in that the source of trivalent aluminium is selected from the group constituted by aluminium salts, aluminium oxides and hydroxides, aluminates and, particularly, alkali-metal aluminates such as sodium aluminate, and esters of aluminium such as aluminium trialkoxides of the formula $Al(OR)_3$) in which R is an $C_1$ to $C_4$ alkyl radical.

**15.** Method according to any one of Claims 1 to 14, characterized in that the source of hydroxide ions is selected from the group constituted by the hydroxides of the alkali metals of group IA of the Periodic Table of Elements, the hydroxides of the alkaline-earth metals Ca, Sr and Ba, and quaternary ammonium hydroxides.

**16.** Method according to any one of Claims 1 to 15, characterized in that the reaction mixture includes the cations $M^{n+}$ of at least one metal M of valency n other than the metals of which the hydroxides are strong bases, in total quantities such that the molar ratio $M^{n+}$ : $Al^{III}$ in the said mixture is at most 0.4 and preferably at most 0.3, the said cations $M^{n+}$ being, in particular, for example, $Co^{++}$, $Cd^{++}$, $Mg^{++}$ and $Ag^{+}$.

**17.** Method according to any one of Claims 1 to 16, characterized in that, before the gel is crystallized, crystallization nuclei are added to the reaction medium which is to form the said gel in quantities of from 0.1% to 10% by weight of the said reaction medium, the said crystallization nuclei being produced, in particular, by the crushing of a zeolite of the same nature as the crystalline phase to be produced, or by synthesis from a suitable nucleation solution.

**18.** Method according to any one of Claims 1 to 16, characterized in that, before the gel is crystallized, the said gel is matured in a closed vessel at a temperature below the crystallization temperature for a

period of from about 6 hours to about 6 days.

**19.** Method according to any one of Claims 1 to 18, characterized in that the aluminosilicate gel is crystallized, with or without nuclei, the said gel being kept at a temperature of from 90 ° C to 120 ° C for a period of time of between 2 hours and fifteen days.

**20.** Method according to any one of Claims 1 to 19, characterized in that the zeolite precursor is calcined at a temperature above 300 ° C and preferably between 400 ° C and 700 ° C.

**21.** Precursors of zeolites of the structural family of faujasite, consisting of aluminosilicates with Si:Al ratios which are greater than 1 and may exceed 3, the precursors having, on the one hand, cubic symmetry structure comparable to that of faujasite or hexagonal symmetry structure comparable to that of the hexagonal polytypes of faujasite, or comprising domains having cubic symmetry structure comparable to that of faujasite and domains having hexagonal symmetry structure comparable to that of the hexagonal polytypes of faujasite and, on the other hand, having cavities or channels in which molecules of a structuring agent ST are trapped, characterized in that the structuring agent ST consists of at least one compound MC selected from the group constituted by carbon macrocycles and macropolycycles the ring or rings of which include heteroatoms selected from O, N, Si and S and which contain 10 to 24 atoms per ring, or results from the association of at least one compound MC with a costructuring agent CS consisting of at least one oxygenated acyclic compound selected from compounds of the formula

$$R_1—O—[—C_mH_{2m-1}\ X - O —]_g—R_2$$

in which $R_1$ and $R_2$ are the same or different, and each represents a hydrogen atom or a $C_1$ to $C_4$ alkyl radical, X indicates a hydrogen atom or an OH radical, m is 2 or 3 and may be different from one structure to another and g is a number from 1 to 12.

**22.** Precursors according to Claim 21, characterized in that the compound or compounds MC forming part of the structuring agent ST are selected from the group constituted by a) crown ethers of which the rings include 10 to 24 atoms and comprise solely oxygen atoms as heteroatoms, the number of oxygen atoms being at least 4, b) compounds derived from the crown ethers defined under a) by the substitution of some or all of the oxygen atoms of the ring by substituents selected from sulphur atoms and $>$NH, $>$NR and

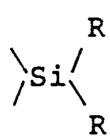

groups
in which R is a $C_1$ to $C_4$ hydrocarbon radical and c) carbon macropolycycles selected from the polyoxadiazabicycloalkanes of which each ring includes 10 to 18 atoms and has at least two oxygen atoms in addition to the two nitrogen atoms.

**23.** Precursors according to Claim 21 or Claim 22, characterized in that,in addition to the compound or compounds MC, the structuring agent ST also includes a costructuring agent CS consisting of at least one compound selected from ethylene glycol methyl ether, ethylene glycol dimethyl ether, ethylene glycol, propylene glycol, polyethylene glycols of the formula

$$HO—(—CH_2CH_2O—)_{g_1}H$$

and their methyl ethers of the formula

$$CH_3-O-(CH_2CH_2O)_{g1}-H$$

and propylene glycols of the formula

$$HO-(CH_2CH_2CH_2O)_{g1}-H,$$

$g_1$ representing a number from 2 to 9 in these formulae.

**24.** Precursors according to any one of Claims 21 to 23 having cubic symmetry structure comparable to that of faujasite, characterized in that they have X-ray diffraction patterns comparable to that defined in Table III:

TABLE III

| $2\theta$ (degrees) | $d_{hkl}$ ($10^{-1}$nm) | (h k l) | I/Io |
|---|---|---|---|
| 6.26 | 14.10 ± 0.2 | (1 1 0) | FF |
| 10.23 | 8.65 | (2 2 0) | f |
| 12.01 | 7.35 | (3 1 1) | mF |
| 15.77 | 5.615 ± 0.05 | (3 3 1) | F |
| 18.81 | 4.713 | (5 1 1) | m |
| 20.49 | 4.331 | (4 4 0) | mF |
| 22.93 | 3.875 | (6 2 0) | f |
| 23.77 | 3.740 | (5 3 3) | mF |
| 25.15 | 3.537 | (4 4 4) | ff |
| 25.93 | 3.433 | (5 5 1) | ff |
| 27.19 | 3.276 | (6 4 2) | mF |
| 27.93 | 3.191 ± 0.008 | (7 3 1) | ff |
| 29.81 | 2.994 | (7 3 3) | f |

and are represented by a formula which, reduced to a cubic structure lattice is written:

$$(vM_1^{q+})\ (wM^{n+})\ ((SiO_2)_{192-x}\ (AlO_2)_x)^{x-}\ (pST_1)\ (zH_2O)$$

and in which $M_1^{q+}$ indicates a q-valent cation of a metal of group IA of the Periodic Table of Elements (q = 1), or of an alkaline-earth metal selected from Ca, Sr and Ba (q = 2), or a monovalent cation including nitrogen (q = 1), particularly ammonium or quaternary ammonium, $M^{n+}$ represents a cation of a metal M of valency n, other than an $M_1^{q+}$ cation, x, z, v and w are numbers such that $30 \leqq x \leqq 96$, $z \geqq 0$ and depending on the hydration state of the precursor, $O < v \leqq \frac{x}{q}$ and $O \leqq w \leqq \frac{x}{n}$ where $qv + wn \geqq x$, p is a number such that $4 \leqq p \leqq 10$ and $ST_1$ represents at least one compound $MC_1$ selected from the compounds MC which are macrocycles of which the rings have from 10 to 17 atoms or macropolycycles including 10 to 18 atoms in each ring or a mixture of at least one compound $MC_1$ and the costructuring agent CS.

**25.** Precursors according to Claim 21 or Claim 22, having hexagonal symmetry structure comparable to that of the hexagonal polytypes of faujasite, characterized in that they have X-ray diffraction patterns comparable to that given in Table IV:

TABLE IV

| 2θ (degrees) | dhkl ($10^{-1}$nm) | (h k l) | I/lo |
|---|---|---|---|
| 5.88 | 15.01 ± 0.2 | (1 0 0) | FF |
| 6.24 | 14.15 | (0 0 2) | F |
| 6.65 | 13.28 | (1 0 1) | F |
| 10.12 | 8.73 ± 0.08 | (1 ) | f |
| 11.01 | 8.03 | (1 0 3) | mf |
| 11.93 | 7.41 | (1 1 2) | mF |
| 13.58 | 6.515 | (2 0 2) | ff |
| 15.57 | 5.686 ± 0.05 | (0 0 5) | mF |
| 15.86 | 5.580 | (2 1 1) | mf |
| 16.70 | 5.305 | (1 0 5) | mf |
| 17.15 | 5.165 | (2 0 4) | F |
| 18.16 | 4.88 | (2 1 3) | mf |
| 18.71 | 4.74 | (1 1 5) | mf |
| 19.65 | 4.509 | (1 0 6) | mF |
| 20.42 | 4.345 | (2 2 0) | F |
| 22.14 | 4.011 | (3 1 2) | mF |
| 22.71 | 3.912 | (1 0 7) | mf |
| 23.32 | 3.811 | (3 1 3) | mf |
| 23.60 | 3.766 | (3 0 5) | mf |
| 24.68 | 3.604 | (3 1 4) | mf |
| 25.81 | 3.449 | (2 2 5) | f |
| 26.49 | 3.362 | (2 1 5) | f |

and are represented by a formula which, reduced to a hexagonal crystalline structure lattice is written:

$(u\ M_1^{q+})\ (rM^{n+})\ ((SiO_2)_{96-y}\ (AlO_2)_y)^{y-}\ (j\ ST_2)\ (t\ H_2O)$ ,

$M_1^{q+}$ , in this formula, indicating a q-valent cation of a metal of group IA of the Periodic Table of Elements (q = 1), or of an alkaline-earth selected from Ca, Sr and Ba (q = 2), or a monovalent cation including nitrogen (q = 1), particularly ammonium or quaternary ammonium, $M^{n+}$ representing a cation of a metal M of valency n other than a cation $M_1^{q+}$ , y, u, r and t being numbers such that $15 \leqq y \leqq 48$, $t \geqq 0$ and depending on the hydration state of the precursor, $0 < u \leqq \frac{y}{q}$ and $0 \leqq r \leqq \frac{y}{n}$ where $q\,u + n\,r \geqq y$, j being a number such that $2 \leqq j \leqq 5$, and $ST_2$ representing at least one compound $MC_2$ selected from the compounds MC which are macrocycles of which the rings include at least 18 atoms.

**26.** Use of the precursors according to any one of Claims 21 to 25 for the production, by the calcination of the said precursors, of zeolites belonging to the structural family of faujasite and having Si:Al ratios which are greater than 1 and may exceed 3, the said zeolites having either cubic symmetry structure comparable to that of faujasite or hexagonal symmetry structure comparable to that of the hexagonal polytypes of faujasite, or comprising domains having cubic symmetry structure comparable to that of faujasite and domains having hexagonal symmetry structure comparable to that of the hexagonal polytypes of faujasite, the zeolites being usable, directly or after cation-exchange, as adsorbants or as components of catalysts.

**27.** Use according to Claim 26 for the production of zeolites having the cubic symmetry structure of faujasite by the calcination of the precursors according to Claim 24, the zeolites obtained having values of the parameter a of the cubic lattice of between 2.4 and 2.5 nm, having X-ray diffraction patterns comparable to that given in Table I:

TABLE I

| 2θ (degrees) | $d_{hkl}$ ($10^{-1}$)nm | (h k l) | I/Io |
|---|---|---|---|
| 6.245 | 14.14 ± 0.2 | (1 1 1) | FF |
| 10.205 | 8.66 | (2 2 0) | F |
| 11.965 | 7.39 | (3 1 1) | mF |
| 15.735 | 5.627 ± 0.05 | (3 3 1) | F |
| 18.775 | 4.721 | (5 1 1) | f |
| 20.465 | 4.335 | (4 4 0) | mf |
| 22.895 | 3.881 | (6 2 0) | f |
| 23.755 | 3.727 | (5 3 3) | mF |
| 25.105 | 3.544 | (4 4 4) | ff |
| 25.965 | 3.428 | (5 5 1) | ff |
| 27.175 | 3.729 | (6 4 2) | mF |
| 27.885 | 3.196 ± 0.008 | (7 3 1) | ff |
| 29.765 | 2.999 | (7 3 3) | f |

and corresponding to a formula which, reduced to a cubic structure lattice, is written:

$(v\ M_1^{q+})\ (wM^{n+})\ ((SiO_2)_{192-x}\ (AlO_2)_x)^{x-}\ (z\ H_2O)$

and in which $M_1^{q+}$, $M^{n+}$, x, z, v, and w have the meanings given in Claim 24.

**28.** Use according to Claim 26 for the production of zeolites having the hexagonal symmetry structure of the hexagonal polytypes of faujasite by the calcination of the precursors according to Claim 25, the zeolites obtained having parameters a, b, c of the hexagonal lattice of the said structure such that 1.72 nm < a = b < 1.77 nm and 2.80 nm < c < 2.89 nm, having X-ray diffraction patterns comparable to that given in Table II:

| 2θ (°) | $d_{hkl}$ ($10^{-1}$nm) | (h k l) | I/Io |
|---|---|---|---|
| 5.88 | 15.03 ± 0.2 | (1 0 0) | FF |
| 6.23 | 14.2 | (0 0 2) | FF |
| 6.66 | 13.3 | (1 0 1) | F |
| 8.40 | 10.52 | (1 0 2) | f |
| 10.19 | 8.68 ± 0.08 | (1 1 0) | F |
| 11.06 | 7.99 | (1 0 3) | mF |
| 11.78 | 7.51 | (2 0 0) | mF |
| 11.95 | 7.40 | (1 1 2) | mF |
| 13.49 | 6.56 | (2 0 2) | ff |
| 15.06 | 5.88 ± 0.05 | (2 0 3) | f |
| 15.58 | 5.68 | (0 0 5) | F |
| 15.89 | 5.57 | (2 1 1) | f |
| 16.73 | 5.29 | (1 0 5) | f |
| 17.18 | 5.16 | (2 0 4) | F |
| 18.22 | 4.87 | (2 1 3) | f |
| 18.79 | 4.72 | (1 1 5) | f |
| 19.67 | 4.51 | (1 0 6) | f |
| 20.45 | 4.34 | (2 2 0) | mF |
| 22.22 | 4.00 | (3 1 2) | f |
| 22.75 | 3.91 | (1 0 7) | f |
| 23.30 | 3.82 | (3 1 3) | f |
| 23.66 | 3.76 | (3 0 5) | F |
| 24.75 | 3.59 | (3 1 4) | f |
| 25.83 | 3.45 | (2 2 5) | f |
| 26.52 | 3.36 | (2 1 5) | f |
| 27.16 | 3.28 | (4 1 0) | f |
| 28.77 | 3.103 ± 0.008 | (3 2 4) | f |
| 30.38 | 2.942 | (4 0 6) | ff |
| 30.89 | 2.894 | (3 3 0) | f |
| 31.20 | 2.866 | (5 0 3) | f |
| 31.56 | 2.834 | (3 3 2) | ff |

and corresponding to a formula which, reduced to a hexagonal structure lattice, is written:

$(u\ M_1^{q+})\ (r\ M^{n+})\ ((SiO_2)_{96-y}\ (AlO_2)_y)^{y-}\ (t\ H_2O)$

and in which the symbols $M_1^{q+}$, $M^{n+}$, y, t, u and r have the meanings given in Claim 25.

**Patentansprüche**

1. Verfahren zur Herstellung von Zeolithen der Faujasitfamilie bei einem Si:Al-Verhältnis von über 1 und gegebenenfalls von über 3, wobei man zuerst ein Reaktionsgemisch bei einem pH von über 10 herstellt, das Wasser, eine Quelle von vierwertigem Silizium, eine Quelle von dreiwertigem Aluminium, eine Quelle von Hydroxidionen in Form einer starken anorganischen oder organischen Base und ein Strukturierungsmittel ST enthält, um ein Alumosilikatgel zu erzeugen, das die gewünschte Zusammensetzung aufweist, um seine Kristallisation zu einer Verbindung der Faujasitfamilie zu ermöglichen, wonach man das erhaltene Gel bei einer Temperatur von höchstens 150°C und unter einem Druck, der zumindest dem Eigendruck des vom Gel gebildeten Gemisches entspricht, während einer Zeitdauer hält, die ausreicht, um die Kristallisation dieses Gels zu einem Zeolithprecursor zu bewirken, der aus dem Zeolithen besteht, der in seinen Hohlräumen das Strukturierungsmittel ST umschließt, und den Precursor zur Zerstörung des Strukturierungsmittels und Erzeugung des Zeolithen glüht, dadurch **gekennzeichnet,** daß das Strukturierungsmittel ST zumindest aus einer Verbindung MC besteht, die zur Gruppe der C-Makrocyclen und -Makropolycyclen gehört, die im Ring bzw. in den Ringen Heteroatome, ausgewählt unter Sauerstoff, Stickstoff, Silizium und Schwefel, aufweisen und 10 bis 24 Atome pro Ring umfassen.

**2.** Verfahren nach Anspruch 1, dadurch **gekennzeichnet,** daß die Menge an Strukturierungsmittel ST im zur Gelbildung bestimmten Reaktionsgemisch so gewählt wird, daß das Molarverhältnis $ST:Al^{III}$ 0,1 bis 4, vorzugsweise 0,1 bis 1 und insbesondere 0,2 bis 0,5 beträgt.

**3.** Verfahren nach Anspruch 1 oder 2, dadurch **gekennzeichnet,** daß die das Reaktionsgemisch bildenden und das Alumosilikatgel ergebenden Komponenten in solchen Mengen verwendet werden, daß das Gel, ausgedrückt als Molarverhältnisse, eine Zusammensetzung von $Si^{IV}:Al^{III}$ = 2 bis 20, $OH^-:Al^{III}$ = 0,5 bis 8, $ST:Al^{III}$ = 0,1 bis 4 und $H_2O:Al^{III}$ = 40 bis 200 aufweist.

**4.** Verfahren nach Anspruch 3, dadurch **gekennzeichnet,** daß die Zusammensetzung so gewählt wird, daß die Verhältnisse $Si^{IV}:Al^{III}$ = 4 bis 10, $OH^-:Al^{III}$ = 1 bis 6, $ST:Al^{III}$ = 0,1 bis 1 und $H_2O:Al^{III}$ = 50 bis 150 betragen.

**5.** Verfahren nach einem der Ansprüche 1 bis 4, dadurch **gekennzeichnet,** daß das Strukturierungsmittel ST wenigstens aus einer Verbindung MC besteht, ausgewählt aus der Gruppe

a) Kronenether, deren Ring 10 bis 24 Atome umfaßt und als Heteroatome ausschließlich Sauerstoffatome enthält, und zwar wenigstens 4,

b) Verbindungen, die von den unter a) definierten Kronenethern durch teilweisen oder vollständigen Ersatz der Sauerstoffatome des Ringes durch Substituenten, ausgewählt unter Schwefelatomen und den Gruppen >NH, >NR und

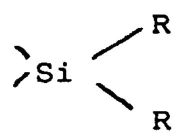 ,

bei denen R ein $C_1$-$C_4$-Kohlenwasserstoffrest ist, abgeleitet sind, und

c) C-Makropolycyclen, ausgewählt unter Polyoxadiazabicycloalkanen, wobei jeder ihrer Ringe 10 bis 18 Atome umfaßt und neben zwei Stickstoffatomen noch wenigstens zwei Sauerstoffatome aufweist.

**6.** Verfahren nach einem der Ansprüche 1 bis 5, dadurch **gekennzeichnet,** daß das Strukturierungsmittel ST durch Assoziation wenigstens einer Verbindung MC mit einem Costrukturierungsmittel CS gebildet wird, das zumindest aus einer acyclischen sauerstoffhaltigen Verbindung besteht, ausgewählt unter Verbindungen der Formel

$$R_1 - O - ( C_mH_{2m-1}\ X - O )_g - R_2$$

worin $R_1$ und $R_2$ gleich oder verschieden sind und jeweils ein Wasserstoffatom oder einen $C_1$-$C_4$-Alkylrest, X ein Wasserstoffatom oder OH bedeuten, m für 2 oder 3 steht und von einem Kettenglied zum anderen unterschiedlich sein kann, und g eine Zahl zwischen 1 und 12 bedeutet.

**7.** Verfahren nach Anspruch 6, dadurch **gekennzeichnet,** daß das Costrukturierungsmittel CS wenigstens aus einer Verbindung besteht, ausgewählt unter Ethylenglycolmethylether, Ethylenglycoldimethylether, Ethylenglycol, Propylenglycol, Polyethylenglycolen der Formel

$$HO - ( CH_2CH_2O )_{g1} - H$$

und ihren Methylethern der Formel

$$CH_3O - ( CH_2CH_2O )_{g1} H$$

und den Polypropylenglycolen der Formel

$$OH -\!\!\left(\!-CH_2CH_2CH_2O-\!\right)\!\!-_{g1}H,$$

wobei $g_1$ in diesen Formeln eine Zahl von 2 bis 9 bedeutet.

**8.** Verfahren nach Anspruch 6 oder 7, dadurch **gekennzeichnet,** daß die Menge an Strukturierungsmittel, das man durch Assoziation wenigstens einer Verbindung MC mit dem Costrukturierungsmittel CS, das in dem zur Gelbildung bestimmten Reaktionsgemisch vorliegt erhält, und die Zusammensetzung des Strukturierungsmittels so gewählt werden, daß das Molarverhältnis Strukturierungsmittel:$Al^{III}$ 0,1 bis 4 beträgt und das Molarverhältnis MC:$Al^{III}$ 0,05 beträgt oder darüber liegt.

**9.** Verfahren nach Anspruch 8, dadurch **gekennzeichnet,** daß die Menge an Strukturierungsmittel und seine Zusammensetzung so gewählt werden, daß das Molarverhältnis Strukturierungsmittel:$Al^{III}$ 0,2 bis 2 beträgt und das Molarverhältnis MC:$Al^{III}$ 0,1 beträgt oder darüber liegt.

**10.** Verfahren nach einem der Ansprüche 1 bis 5, dadurch **gekennzeichnet,** daß das Strukturierungsmittel wenigstens aus einer Verbindung $MC_1$ besteht, ausgewählt unter den Verbindungen MC, die Makrocyclen mit 10 bis 17 Atomen im Ring oder Makropolycyclen mit 10 bis 18 Atomen in jedem Ring darstellen, um einen Zeolithen mit der kubischen Symmetrie der Faujasitstruktur zu erhalten.

**11.** Verfahren nach einem der Ansprüche 6 bis 9, dadurch **gekennzeichnet,** daß das Strukturierungsmittel durch Assoziation eines Costrukturierungsmittels CS mit wenigstens einer Verbindung $MC_1$, ausgewählt unter den Verbindungen MC, die Makrocyclen mit 10 bis 17 Atomen im Ring oder Makropolycyclen mit 10 bis 18 Atomen in jedem Ring darstellen, hergestellt wird, um einen Zeolithen mit der kubischen Symmetrie der Faujasitstruktur zu erhalten.

**12.** Verfahren nach einem der Ansprüche 1 bis 5, dadurch **gekennzeichnet,** daß das Strukturierungsmittel wenigstens aus einer Verbindung $MC_2$ besteht, ausgewählt unter den Verbindungen MC, die Makrocyclen mit wenigstens 18 Atomen im Ring darstellen, um einen Zeolithen mit der hexagonalen Symmetrie der hexagonalen Faujasit-Polytypen zu erhalten.

**13.** Verfahren nach einem der Ansprüche 1 bis 12, dadurch **gekennzeichnet,** daß die Quelle des vierwertigen Siliziums ausgewählt wird aus der Gruppe, bestehend aus feinverteilten Kieselerden, die in Form von Hydrogelen, Aerogelen oder kolloidalen Suspensionen vorliegen, wasserlöslichen Silikaten wie Alkalisilikaten, wie z.B. Natriumsilikat, und wasserlöslichen Kieselsäureestern wie Tetralakylorthosilikaten der Formel $Si(OR)_4$, worin R einen $C_1$-$C_4$-Rest bedeutet.

**14.** Verfahren nach einem der Ansprüche 1 bis 13, dadurch **gekennzeichnet,** daß die Quelle des dreiwertigen Aluminiums ausgewählt wird aus der Gruppe Aluminiumsalze, Aluminiumoxide und -hydroxide, Aluminate und insbesondere Alkalialuminate wie Natriumaluminat sowie Aluminiumester wie Aluminiumtrialkanolate der Formel $Al(OR)_3$, worin R einen $C_1$-$C_4$-Rest bedeutet.

**15.** Verfahren nach einem der Ansprüche 1 bis 14, dadurch **gekennzeichnet,** daß die Quelle der Hydroxidionen ausgewählt wird aus der Gruppe Hydroxide von Alkalimetallen der Gruppe IA des Periodensystems, Hydroxide der Erdalkalimetalle Ca, Sr und Ba und quaternäre Ammoniumhydroxide.

**16.** Verfahren nach einem der Ansprüche 1 bis 15, dadurch **gekennzeichnet,** daß das Reaktionsgemisch Kationen $M^{n+}$ wenigstens eines Metalls M mit der Wertigkeit n enthält, und zwar von Metallen, deren Hydroxide keine starken Basen bilden, in einer solchen Gesamtmenge, daß das Molverhältnis $M^{n+}$:$Al^{III}$ im Gemisch höchstens 0,4, vorzugsweise jedoch höchstens 0,3 beträgt, wobei die Kationen $M^{n+}$ insbesondere solche wie $Co^{++}$, $Cd^{++}$, $Mg^{++}$ und $Ag^{+}$ sind.

**17.** Verfahren nach einem der Ansprüche 1 bis 16, dadurch **gekennzeichnet,** daß man vor der Kristallisation des Gels dem für die Gelbildung bestimmten Reaktionsmedium Kristallisationskeime in einer Menge von 0,1 bis 10 Gew.-%, bezogen auf das Reaktionsmedium, zusetzt, wobei diese insbesondere durch Zerkleinern eines Zeolithen, der von derselben Art ist wie die zu erzeugende kristalline Phase, oder durch Synthese, ausgehend von einer geeigneten Keimbildungslösung, hergestellt werden.

**18.** Verfahren nach einem der Ansprüche 1 bis 16, dadurch **gekennzeichnet,** daß man vor der Kristallisation des Gels dieses in einem geschlossenen Raum bei einer Temperatur unterhalb der Kristallisationstemperatur während ca. 6 Stunden bis ca. 6 Tagen reifen läßt.

**19.** Verfahren nach einem der Ansprüche 1 bis 18, dadurch **gekennzeichnet,** daß die Kristallisation des Alumosilikatgels in An- oder Abwesenheit von Keimen so durchgeführt wird, daß das Gel bei einer Temperatur zwischen 90 und 120 ° C während 2 Stunden bis 15 Tagen gehalten wird.

**20.** Verfahren nach einem der Ansprüche 1 bis 19, dadurch **gekennzeichnet,** daß das Glühen des Zeolithprecursors bei einer Temperatur von über 300 ° C und vorzugsweise zwischen 400 und 700 ° C durchgeführt wird.

**21.** Zeolithprecursor der Faujasitfamilie, bestehend aus Alumosilikaten mit einem Si:Al-Verhältnis von über 1 und gegebenenfalls von über 3, die einerseits eine Struktur von kubischer Symmetrie aufweisen, vergleichbar mit derjenigen von Faujasit oder andererseits eine Struktur von hexagonaler Symmetrie, vergleichbar mit der von hexagonalen Faujasit-Polytypen oder Bereiche aufweisen, die eine Struktur von kubischer Symmetrie zeigen, vergleichbar mit derjenigen von Faujasit, sowie Bereiche, die eine Struktur von hexagonaler Symmetrie aufweisen, vergleichbar mit derjenigen von hexagonalen Faujasit-Polytypen, und andererseits Hohlräume oder Kanäle aufweisen, die Moleküle eines Strukturierungsmittels ST umschließen, dadurch **gekennzeichnet,** daß das Strukturierungsmittel ST zumindest aus einer Verbindung MC besteht, ausgewählt aus der Gruppe der C-Makrocyclen und -Makropolycyclen, die im Ring bzw. in den Ringen Heteroatome, ausgewählt unter O, N, Si und S, aufweisen und 10 bis 24 Atome pro Ring umfassen, oder es durch Assoziation wenigstens einer Verbindung MC mit einem Costrukturierungsmittel CS gebildet wird, das zumindest aus einer acyclischen sauerstoffhaltigen Verbindung besteht, ausgewählt unter Verbindungen der Formel

$$R_1 - O - [C_mH_{2m-1}\ X - O]_g - R_2,$$

worin $R_1$ und $R_2$ gleich oder verschieden sind und jeweils ein Wasserstoffatom oder einen $C_1$-$C_4$-Alkylrest, X ein Wasserstoffatom oder OH bedeuten, m für 2 oder 3 steht und von einem Kettenglied zum anderen unterschiedlich sein kann, und g eine Zahl zwischen 1 und 12 bedeutet.

**22.** Precursor nach Anspruch 21, dadurch **gekennzeichnet,** daß die Verbindung oder die Verbindungen MC, welche das Strukturierungsmittel ST enthält, ausgewählt sind aus der Gruppe

a) Kronenether, deren Ring 10 bis 24 Atome umfaßt und als Heteroatome ausschließlich Sauerstoffatome enthält, und zwar wenigstens 4,

b) Verbindungen, die von den unter a) definierten Kronenethern durch teilweisen oder vollständigen Ersatz der Sauerstoffatome des Ringes durch Substituenten, ausgewählt unter Schwefelatomen und den Gruppen $>$NH, $>$NR und

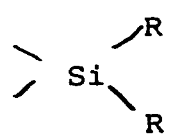
,

bei denen R ein $C_1$-$C_4$-Kohlenwasserstoffrest ist, abgeleitet sind, und

c) C-Makropolycyclen, ausgewählt unter Polyoxadiazabicycloalkanen, wobei jeder ihrer Ringe 10 bis 18 Atome umfaßt und neben zwei Stickstoffatomen noch wenigstens zwei Sauerstoffatome aufweist.

**23.** Precursor nach Anspruch 21 oder 22, dadurch **gekennzeichnet,** daß das Strukturierungsmittel ST neben der Verbindung bzw. den Verbindungen MC auch noch ein Costrukturierungsmittel CS enthält, bestehend aus wenigstens einer Verbindung, ausgewählt unter Ethylenglycolmethylether, Ethylenglycoldimethylether, Ethylenglycol, Propylenglycol, Polyethylenglycolen der Formel

$$HO - (CH_2CH_2O)_{g1} - H$$

und ihren Methylethern der Formel

$$CH_3-O-(CH_2CH_2O)_{g1}-H$$

und den Propylenglycolen der Formel

$$HO-(CH_2CH_2CH_2O)_{g1}-H,$$

wobei $g_1$ in diesen Formel eine Zahl von 2 bis 9 bedeutet.

**24.** Precursor nach einem der Ansprüche 21 bis 23, die eine Struktur von kubischer Symmetrie aufweisen, vergleichbar mit derjenigen von Faujasit, dadurch **gekennzeichnet,** daß sie ein Röntgenbeugungsdiagramm zeigen, das mit dem in Tabelle III dargestellten vergleichbar ist:

Tabelle III

| $2\theta$ (Grad) | $d_{hkl}(10^{-1}nm)$ | (h k l) | I/Io |
|---|---|---|---|
| 6,26 | 14,10 ± 0,2 | (1 1 0) | FF |
| 10,23 | 8,65 | (2 2 0) | f |
| 12,01 | 7,35 | (3 1 1) | mF |
| 15,77 | 5,615 ± 0,05 | (3 3 1) | F |
| 18,81 | 4,713 | (5 1 1) | m |
| 20,49 | 4,331 | (4 4 0) | mF |
| 22,93 | 3,875 | (6 2 0) | f |
| 23,77 | 3,740 | (5 3 3) | mF |
| 25,15 | 3,537 | (4 4 4) | ff |
| 25,93 | 3,433 | (5 5 1) | ff |
| 27,19 | 3,276 | (6 4 2) | mF |
| 27,93 | 3,191 ± 0,008 | (7 3 1) | ff |
| 29,81 | 2,994 | (7 3 3) | f |

und die, zurückgeführt auf eine Elementarzelle von kubischer Struktur folgende Formel aufweisen:

$$(vM_1^{q+})\ (wM^{n+})\ ((SiO_2)_{192-x}(AlO_2)_x)^{x-}\ (pST_1)\ (zH_2O)$$

worin $M_1^{q+}$ ein q-wertiges Kation eines Metalls der Gruppe IA des Periodensystems (q = 1) oder eines Erdalkalimetalls der Gruppe Ca, Sr und Ba (q = 2) oder ein einwertiges, Stickstoff enthaltendes Kation (q = 1) bedeutet, insbesondere Ammonium oder quaternäres Ammonium, $M^{n+}$ das Kation eines n-wertigen Metalls M darstellt, das von dem Kation $M_1^{q+}$ unterschiedlich ist, und x, z, v und w den Zahlenwerten $30 \leq x \leq 96$, $z \geq 0$ und abhängig von dem Hydratisierungszustand des Precursors, $0 < v \leq \frac{x}{q}$ und $O \leq w \leq \frac{x}{n}$ mit $qv + wn \geq x$ entsprechen, p eine Zahl von 4 bis 10 bedeutet und $ST_1$ wenigstens eine Verbindung $MC_1$ darstellt, ausgewählt unter den Verbindungen MC, die Makrocyclen mit 10 bis 17 Atomen im Ring oder Makropolycyclen mit 10 bis 18 Atomen in jedem Ring oder ein Gemisch wenigstens einer Verbindung $MC_1$ mit einem Costrukturierungsmittel CS darstellen.

**25.** Precursor nach Anspruch 21 oder 22, die eine Struktur von hexagonaler Symmetrie aufweisen, vergleichbar mit derjenigen von Faujasit, dadurch **gekennzeichnet,** daß sie ein Röntgenbeugungsdiagramm zeigen, das mit dem in Tabelle IV dargestellten vergleichbar ist:

Tabelle IV

| 2θ (Grad) | $d_{hkl}$ ($10^{-1}$nm) | (h k l) | I/Io |
|---|---|---|---|
| 1 | 2 | 3 | 4 |
| 5,88 | 15,01 ± 0,2 | (1 0 0) | FF |
| 6,24 | 14,15 | (0 0 2) | F |
| 6,65 | 13,28 | (1 0 1) | F |
| 10,12 | 8,73 ± 0,08 | (1 ) | f |
| 11,01 | 8,03 | (1 0 3) | mf |
| 11,93 | 7,41 | (1 1 2) | mF |
| 13,58 | 6,515 | (2 0 2) | ff |
| 15,57 | 5,686 ± 0,05 | (0 0 5) | mF |
| 15,86 | 5,580 | (2 1 1) | mf |
| 16,70 | 5,305 | (1 0 5) | mf |
| 17,15 | 5,165 | (2 0 4) | F |
| 18,16 | 4,88 | (2 1 3) | mf |
| 18,71 | 4,74 | (1 1 5) | mf |
| 19,65 | 4,509 | (1 0 6) | mF |
| 20,42 | 4,345 | (2 2 0) | F |
| 22,14 | 4,011 | (3 1 2) | mF |
| 22,71 | 3,912 | (1 0 7) | mf |
| 23,32 | 3,811 | (3 1 3) | mf |
| 23,60 | 3,766 | (3 0 5) | mf |
| 24,68 | 3,604 | (3 1 4) | mf |
| 25,81 | 3,449 | (2 2 5) | f |
| 26,49 | 3,362 | (2 1 5) | f |

und die, zurückgeführt auf eine Elementarzelle von hexagonaler Kristallstruktur folgende Formel aufweisen:

$(u\ M_1^{q+})\ (rM^{n+})\ ((SiO_2)_{96-y}(AlO_2)_y)^{y-}\ (j\ ST_2)\ (t\ H_2O)$ ,

worin $M_1^{q+}$ ein q-wertiges Kation eines Metalls der Gruppe IA des Periodensystems (q = 1) oder eines Erdalkalimetalls der Gruppe Ca, Sr und Ba (q = 2) oder ein einwertiges, Stickstoff enthaltendes Kation (q = 1) bedeutet, insbesondere Ammonium oder quaternäres Ammonium, $M^{n+}$ das Kation eines n-wertigen Metalls M darstellt, das von dem Kation $M_1^{q+}$ unterschiedlich ist, und y, u, r und t den Zahlenwerten $15 \leqq y \leqq 48$, $t \geqq 0$ und abhängig von dem Hydratisïerungszustand des Precursors, $0 < u \leqq \frac{y}{q}$ und $0 \leqq r \leqq \frac{y}{n}$ mit $qu + nr \geqq y$ entsprechen,
j eine Zahl von 2 bis 5 bedeutet und $ST_2$ wenigstens eine Verbindung $MC_2$ darstellt, ausgewählt unter den Verbindungen MC, die Makrocyclen darstellen, die wenigstens 18 Atome im Ring enthalten.

**26.** Verwendung der Precursor nach einem der Ansprüche 21 bis 25 zur Herstellung von Zeolithen der Faujasitfamilie bei einem Si:Al-Verhältnis von über 1 und gegebenenfalls von über 3, durch Glühen der Precursor, wobei die Zeolithe entweder eine Struktur von kubischer Symmetrie aufweisen, vergleichbar mit derjenigen von Faujasit oder eine Struktur von hexagonaler Symmetrie, vergleichbar mit der von hexagonalen Faujasit-Polytypen, oder Bereiche aufweisen, die eine Struktur von kubischer Symmetrie zeigen, vergleichbar mit denjenigen von Faujasit, sowie Bereiche, die eine Struktur von hexagonaler Symmetrie aufweisen, vergleichbar mit derjenigen von hexagonalen Faujasit-Polytypen, und unmittelbar oder nach Kationenaustausch als Adsorbentien oder als Katalysatorkomponenten verwendet werden können.

**27.** Verwendung nach Anspruch 26 zur Herstellung von Zeolithen mit einer Struktur von kubischer Symmetrie vom Faujasittyp durch Glühen der Precursor nach Anspruch 24, wobei die erhaltenen Zeolithe einen Wert des Parameters a der kubischen Zelle zwischen 2,4 und 2,5 nm aufweisen und ein Röntgenbeugungsdiagramm zeigen, das mit dem in Tabelle I dargestellten vergleichbar ist:

Tabelle I

| 2θ (Grad) | $d_{hkl}$ ($10^{-1}$nm) | (h k l) | I/Io |
|---|---|---|---|
| 1 | 2 | 3 | 4 |
| 6,245 | 14,14 ± 0,2 | (1 1 1) | FF |
| 10,205 | 8,66 | (2 2 0) | F |
| 11,965 | 7,39 | (3 1 1) | mF |
| 15,735 | 5,627 ± 0,05 | (3 3 1) | F |
| 18,775 | 4,721 | (5 1 1) | f |
| 20,465 | 4,335 | (4 4 0) | mf |
| 22,895 | 3,881 | (6 2 0) | f |
| 23,755 | 3,727 | (5 3 3) | mF |
| 25,105 | 3,544 | (4 4 4) | ff |
| 25,965 | 3,428 | (5 5 1) | ff |
| 27,175 | 3,279 | (6 4 2) | mF |
| 27,885 | 3,196 ± 0,008 | (7 3 1) | ff |
| 29,765 | 2,999 | (7 3 3) | f |

und die, zurückgeführt auf eine Elementarzelle von kubischer Struktur folgende Formel aufweisen:

$(v\ M_1^{q+})\ (wM^{n+})\ ((SiO_2)_{192-x}\ (AlO_2)_x)^{x-}(z\ H_2O)$,

worin $M_1^{q+}$, $M^{n+}$, x, z, v und w die in Anspruch 24 angegebenen Bedeutungen haben.

**28.** Verwendung nach Anspruch 26 zur Herstellung von Zeolithen mit einer Struktur von hexagonaler Symmetrie der hexagonalen Faujasit-Polytypen durch Glühen der Precursor nach Anspruch 25, wobei die erhaltenen Zeolithe Parameter a, b und c der hexagonalen Zelle dieser Struktur aufweisen, die den Zahlenwerten 1,72 nm<a=b<1,77 nm und 2,80 nm<c<2,89 nm entsprechen, und ein Röntgenbeugungsdiagramm zeigen, das mit dem in Tabelle II dargestellten vergleichbar ist :

Tabelle II

| 2θ (Grad) | $d_{hkl}$ ($10^{-1}$nm) | (h k l) | I/Io |
|---|---|---|---|
| 5,88 | 15,03 ± 0,2 | (1 0 0) | FF |
| 6,23 | 14,2 | (0 0 2) | FF |
| 6,66 | 13,3 | (1 0 1) | F |
| 8,40 | 10,52 | (1 0 2) | f |
| 10,19 | 8,68 ± 0,08 | (1 1 0) | F |
| 11,06 | 7,99 | (1 0 3) | mF |
| 11,78 | 7,51 | (2 0 0) | mF |
| 11,95 | 7,40 | (1 1 2) | mF |
| 13,49 | 6,56 | (2 0 2) | ff |
| 15,06 | 5,88 ± 0,05 | (2 0 3) | f |
| 15,58 | 5,68 | (0 0 5) | F |
| 15,89 | 5,57 | (2 1 1) | f |
| 16,73 | 5,29 | (1 0 5) | f |
| 17,18 | 5,16 | (2 0 4) | F |
| 18,22 | 4,87 | (2 1 3) | f |
| 18,79 | 4,72 | (1 1 5) | f |
| 19,67 | 4,51 | (1 0 6) | f |
| 20,45 | 4,34 | (2 2 0) | mF |
| 22,22 | 4,00 | (3 1 2) | f |
| 22,75 | 3,91 | (1 0 7) | f |
| 23,30 | 3,82 | (3 1 3) | f |
| 23,66 | 3,76 | (3 0 5) | F |
| 24,75 | 3,59 | (3 1 4) | f |
| 25,83 | 3,45 | (2 2 5) | f |
| 26,52 | 3,36 | (2 1 5) | f |
| 27,16 | 3,28 | (4 1 0) | f |
| 28,77 | 3,103 ± 0,008 | (3 2 4) | f |
| 30,38 | 2,942 | (4 0 6) | ff |
| 30,89 | 2,894 | (3 3 0) | f |
| 31,20 | 2,866 | (5 0 3) | f |
| 31,56 | 2,834 | (3 3 2) | ff |

und die, zurückgeführt auf eine Elementarzelle von hexagonaler Struktur, folgende Formel aufweisen:

$(u\ M_1^{q+})\ (r\ M^{n+})\ ((SiO_2)_{96-y}\ (AlO_2)_y)^{y-}\ (t\ H_2O)$ ,

worin $M_1^{q+}$ , $M^{n+}$, y, t, u und r die in Anspruch 25 angegebenen Bedeutungen haben.